# EUROPEAN PATENT APPLICATION

(11) **EP 3 792 739 A1**
(43) Date of publication of application: **17.03.2021**
(21) Application number: 19290090.0
(22) Date of filing: 13.09.2019
(51) Int. Cl.: G06F 3/0483, G06F 3/0488, G06F 40/169, G06F 40/171

(54) **SYSTEMS AND METHODS FOR MACRO-MODE DOCUMENT EDITING**

(71) Applicant: MyScript, 44339 Nantes Cedex 3 (FR)
(72) Inventor: RUCINE, Nicolas, 44339 NANTES Cedex 3 (FR); DODOKAL, Julien, 44339 NANTES Cedex 3 (FR)
(74) Representative: Müller-Boré & Partner Patentanwälte PartG mbB

(57) **Abstract**

A system for editing digital documents on computing devices is disclosed. Each computing device comprising a processor and at least one non-transitory computer readable medium for recognizing handwriting input under control of the processor, the at least one non-transitory computer readable medium configured to cause display of, on a display interface of a computing device, digital ink in accordance with document content in a full-page mode, cause display of, on the display interface of the computing device, digital ink in accordance with document content in a macro mode selectively transition, via a transitioner, between the full-page mode and the macro mode and edit document content, in response to a user touch or gesture, when the digital ink in accordance with document content is displayed in the macro mode.

## Description

### TECHNICAL FIELD

The present description relates generally to the field of digital note taking systems and methods using computing device interfaces. The present description relates more specifically to digital note taking systems and methods capable of editing documents in a macro viewing mode.

### BACKGROUND

Computing devices continue to become more ubiquitous to daily life. They take the form of computer desktops, laptop computers, tablet computers, hybrid computers (2-in-1s), e-book readers, mobile phones, smartphones, wearable computers (including smartwatches, smart glasses/headsets), global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC) and home and commercial appliances.

Computing devices generally consist of at least one processing element, such as a central processing unit (CPU), some form of memory, and input and output devices. The variety of computing devices and their subsequent uses necessitate a variety of interfaces and input devices. One such input device is a touch sensitive surface such as a touch screen or touch pad wherein user input is received through contact between the user's finger or an instrument such as a pen or stylus and the touch sensitive surface. Another input device is an input surface that senses gestures made by a user above the input surface. A further input device is a position detection system which detects the relative position of either touch or non-touch interactions with a non-touch physical or virtual surface. Any of these methods of input can be used generally for drawing or inputting text. When user input is text the user's handwriting is interpreted using a handwriting recognition system or method.

One application of handwriting recognition in portable computing devices, such as smartphones, phablets and tablets, is in note taking. This particularly occurs in education and business settings where the user of the computing device captures notes, for example, during a lecture or meeting. This is usually done by the user launching a handwritten note taking application on the computing device which accepts and interprets, either locally in the device or remotely via a communications link of the device, handwritten notes input on the touch sensitive surface. Conventionally such handwritten note taking applications are limited in their capabilities to provide a full document creation or editing experience to users from the notes taken, since the focus of these applications has primarily been recognition accuracy rather than document creation.

If the user desires any further interaction with the output text, such as editing the content, manipulating the layout of the notes, or converting or adding the notes into a document, the text generally needs to be imported into a separate document processing application. Some available handwriting digital note taking applications provide the ability to edit on the digital ink. However, this is generally done through the input of particular gestures for causing some sort of control, e.g., the launching of menus or running processes, and is also generally done in a conventional full-page document viewing mode.

Accordingly, there is a need for systems and methods of document, text and/or page editing within a macro document viewing mode to facilitate enhanced editing operations and to provide an enhanced user experience.

### SUMMARY

The examples of the present invention that are described herein below provide systems and methods for editing digital documents on computing devices.

In some aspects, a system for editing digital documents on computing devices is disclosed. Each computing device includes a processor and at least one non-transitory computer readable medium for recognizing handwriting input under control of the processor, the at least one non-transitory computer readable medium can be configured to: cause display of, on a display interface of a computing device, digital ink in accordance with document content in a full-page mode; cause display of, on the display interface of the computing device, digital ink in accordance with document content in a macro mode; selectively transition, via a transitioner, between the full-page mode and the macro mode; and edit document content, in response to a user touch or gesture, when the digital ink in accordance with document content is displayed in the macro mode.

A page, when viewed in the macro mode, can include one or more sections, each section can be sequentially arranged in a vertically-scrollable column.

A plurality of pages can be visible in the macro mode, the plurality of pages, and other pages not visible in the macro mode, can be horizontally-scrollable in the macro mode via a horizontal scrolling gesture.

A deletion gesture in the macro mode can remove document content, to which the deletion gesture was applied, from a page or a section when the document content is displayed in the macro mode.

A section joining gesture in the macro mode can combine two sequentially-adjacent sections to which the section joining gesture was applied.

A section addition gesture in the macro mode can divide an existing section, to which the section addition gesture was applied, into two sections.

A section removal gesture in the macro mode can delete a section to which the section removal gesture was applied.

A page removal gesture in the macro mode can delete all sections in a given page to which the page removal gesture was applied.

In some aspects, a method for editing digital documents on computing devices is disclosed. Each computing device can include a processor and at least one non-transitory computer readable medium for recognizing handwriting input under control of the processor, the method can include: causing display of, on a display interface of a computing device, digital ink in accordance with document content in a full-page mode; causing display of, on the display interface of the computing device, digital ink in accordance with document content in a macro mode; selectively transitioning, via a transitioner, between the full-page mode and the macro mode; and editing document content, in response to a user touch or gesture, when the digital ink in accordance with document content is displayed in the macro mode.

A page, when viewed in the macro mode, can include one or more sections, each section can be sequentially arranged in a vertically-scrollable column.

A plurality of pages can be visible in the macro mode, the plurality of pages, and other pages not visible in the macro mode, can be horizontally-scrollable in the macro mode via a horizontal scrolling gesture.

A deletion gesture in the macro mode can remove document content, to which the deletion gesture was applied, from a page or a section when the document content is displayed in the macro mode.

A section joining gesture in the macro mode can combine two sequentially-adjacent sections to which the section joining gesture was applied.

A section addition gesture in the macro mode can divide an existing section, to which the section addition gesture was applied, into two sections.

A section removal gesture in the macro mode can delete a section to which the section removal gesture was applied.

A page removal gesture in the macro mode can delete all sections in a given page to which the page removal gesture was applied.

In some aspects, a non-transitory computer readable medium having a computer readable program code embodied therein is disclosed. The computer readable program code can be adapted to be executed to implement a method for recognizing input of editing handwriting to a computing device, the computing device including a processor and at least one system non-transitory computer readable medium for recognizing the input under control of the processor. The method can include: causing display of, on a display interface of a computing device, digital ink in accordance with document content in a full-page mode; causing display of, on the display interface of the computing device, digital ink in accordance with document content in a macro mode; selectively transitioning, via a transitioner, between the full-page mode and the macro mode; and editing document content, in response to a user touch or gesture, when the digital ink in accordance with document content is displayed in the macro mode.

A page, when viewed in the macro mode, can include one or more sections, each section can be sequentially arranged in a vertically-scrollable column.

A plurality of pages can be visible in the macro mode, the plurality of pages, and other pages not visible in the macro mode, can be horizontally-scrollable in the macro mode via a horizontal scrolling gesture.

A section addition gesture in the macro mode can divide an existing section, to which the section addition gesture was applied, into two sections.

In other aspects of the present disclosure, a system for editing digital documents on computing devices is disclosed. The system is configured to cause display of, on a display interface of a computing device, digital ink in accordance with document content in a full-page mode; register, on an input area of the computing device, a slice gesture responsive to a user touch or gesture, the slice gesture comprising: a start point, a generally horizontal gesture relative to the digital ink, and an end point; create a draft section in response to the slice gesture; display the draft section generally below a slice gesture input area; and stop displaying all or a portion of the digital ink generally below the slice gesture input area.

The system may include a page, which includes one or more sections, each section being sequentially arranged in a vertically-scrollable column.

In some embodiments, the drawing section is a new page or a new section.

In some embodiments, the system additionally validates the slice gesture, which may be based on at least one of a width of the slice gesture, a height of the slice gesture, a direction of the slice gesture, and a speed of the slice gesture.

In some embodiments, the system additionally displays a digital ink stroke in response to the slice gesture, the digital ink stroke generally tracing the path of the slice gesture.

In some embodiments, the digital ink stroke fades over a period of time.

### BRIEF DESCRIPTION OF THE DRAWINGS

The present system and method will be more fully understood from the following detailed description of the examples thereof, taken together with the drawings. In the drawings like reference numerals depict like elements. In the drawings:
FIG. 1 shows a block diagram of a computing device in accordance with exemplary implementations of the present disclosure.
FIG. 2 shows a block diagram of a system for document editing in accordance with exemplary implementations of the present disclosure.
FIG. 3 shows a block diagram illustrating detail of the document editing system of FIG. 2.
FIG. 4 shows a schematic view of an example visual rendering of a scroll page on a portion of an input surface of the computing device in accordance with exemplary implementations of the present disclosure.
FIGS. 5A to 5F illustrate processes of transitioning between a macro viewing mode and a conventional full-page viewing mode in accordance with exemplary implementations of the present disclosure.
FIGS. 6A and 6B illustrate a process of vertically-scrolling text within a given page in a macro viewing mode in accordance with exemplary implementations of the present disclosure.
FIGS. 7A to 7C illustrate a process of converting a handwriting input into digital ink text in a page within a macro viewing mode and further editing the digital ink text in accordance with exemplary implementations of the present disclosure.
FIGS. 8A to 8D illustrate a process of zooming within a macro viewing mode in accordance with exemplary implementations of the present disclosure.
FIG. 9 illustrates a macro viewing mode in accordance with exemplary implementations of the present disclosure, in particular showing multiple sections within individual pages.
FIGS. 10A and 10B illustrate vertical scrolling within a single page among multiple sections therein and a continuous content flow among individual pages in accordance with exemplary implementations of the present disclosure.
FIGS. 11A and 11B illustrate a process for adding a new section according to exemplary implementations of the present disclosure.
FIGS. 12A to 12D illustrate processes of splitting a section into multiple sections and moving sections to a new page according to exemplary implementations of the present disclosure.
FIGS. 13A to 13J illustrate a process of performing a slice gesture according to exemplary implementations of the present disclosure.
FIGS. 14A and 14B illustrate a process of moving sections to a previous page according to exemplary implementations of the present disclosure.
FIGS. 15A to 15F illustrate processes of combining multiple sections into a single section according to exemplary implementations of the present disclosure.
FIGS. 16A and 16B illustrate a process of removing a section according to exemplary implementations of the present disclosure.
FIGS. 17A and 17B illustrate a process of removing multiple sections in multiple pages according to exemplary implementations of the present disclosure.
FIGS. 18A to 18C illustrate processes of creating a new page space in a macro viewing mode according to exemplary implementations of the present disclosure.
FIGS. 19A and 19B illustrate a process of removing all sections on a single page and creating a new page space in a macro viewing mode, as well as creating a new page, according to exemplary implementations of the present disclosure.
FIGS. 20A to 20C illustrate process of moving pages to fill a vacant page space according to exemplary implementations of the present disclosure.
FIGS. 21A to 21C illustrate examples of text and images that can be displayed within pages and sections according to exemplary implementations of the present disclosure.

### DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference to and discussion of directional features such as up, down, above, below, lowest, highest, horizontal, vertical, etc., are made with respect to the Cartesian coordinate system as applied to the input surface on which the input to be recognized is made. Further, terms such as left and right are made in relation to the reader's frame of reference when viewing the drawings. Furthermore, the use of the term 'text' in the present description is understood as encompassing all alphanumeric characters, and strings thereof, in any written language and common place non-alphanumeric characters, e.g., symbols, used in written text. Further still, the term 'non-text' in the present description is understood as encompassing freeform handwritten or hand-drawn content and rendered text and image data, as well as non-alphanumeric characters, and strings thereof, and alphanumeric characters, and strings thereof, which are used in non-text contexts. Furthermore, the examples shown in these drawings are in a left-to-right written language context, and therefore any reference to positions can be adapted for written languages having different directional formats.

The various technologies described herein generally relate to capture, processing, editing and managing hand-drawn and handwritten content on portable and non-portable computing devices in a manner which retains the inputted style of the content while allowing conversion to a faithful typeset or beautified version of that content. The systems and methods described herein may utilize recognition of users' natural writing and drawing styles input to a computing device via an input surface, such as a touch sensitive screen, connected to, or of, the computing device or via an input device, such as a digital pen or mouse, connected to the computing device or via a physical or virtual surface monitored by a position detection system. Whilst the various examples are described with respect to recognition of handwriting input using so-called online recognition techniques, it is understood that application is possible to other forms of input for recognition, such as offline recognition in which images rather than digital ink are recognized. The terms hand-drawing and handwriting are used interchangeably herein to define the creation of digital content by users through use of their hands either directly onto a digital or digitally connected medium or via an input tool, such as a hand-held stylus. The term "hand" is used herein to provide concise description of the input techniques, however the use of other parts of a users' body for similar input is included in this definition, such as foot, mouth and eye.

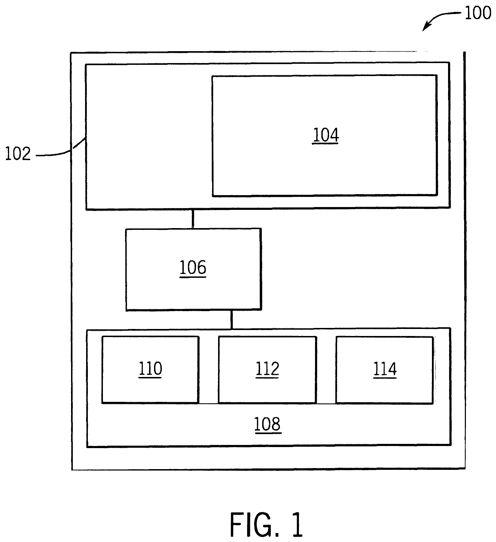

FIG. 1 shows a block diagram of an example computing device 100. The computing device 100 may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console or the like. The computing device 100 includes components of at least one processing element, some form of memory and input and/or output (I/O) devices. The components communicate with each other through inputs and outputs, such as connectors, lines, buses, cables, buffers, electromagnetic links, networks, modems, transducers, IR ports, antennas or others known to those of ordinary skill in the art.

The computing device 100 has at least one display 102 for outputting data from the computing device such as images, text and video. The display 102 may use LCD, plasma, LED, iOLED CRT or any other appropriate technology that is or is not touch sensitive, as known to those of ordinary skill in the art. At least some of the display 102 is co-located with at least one input surface 104. The input surface 104 may employ technology such as resistive, surface acoustic wave, capacitive, infrared grid, infrared acrylic projection, optical imaging, dispersive signal technology, acoustic pulse recognition or any other appropriate technology as known to those of ordinary skill in the art to receive user input. The input surface 104 may be bounded by a permanent or video-generated border that clearly identifies its boundaries.

In addition to the input surface 104, the computing device 100 may include one or more additional I/O devices (or peripherals) that are communicatively coupled via a local interface. The additional I/O devices may include input devices such as a keyboard, mouse, scanner, microphone, touchpads, bar code readers, laser readers, radio-frequency device readers, or any other appropriate technology known to those of ordinary skill in the art. Further, the I/O devices may include output devices such as a printer, bar code printers, or any other appropriate technology known to those of ordinary skill in the art. Furthermore, the I/O devices may include communications devices that communicate both inputs and outputs such as a modulator/demodulator (modem; for accessing another device, system, or network), a radio frequency (RF) or other transceiver, a telephonic interface, a bridge, a router, or any other appropriate technology known to those of ordinary skill in the art. The local interface may have additional elements to enable communications, such as controllers, buffers (caches), drivers, repeaters, and receivers, which are omitted for simplicity but known to those of skill in the art. Further, the local interface may include address, control, and/or data connections to enable appropriate communications among the other computer components.

The computing device 100 also includes a processor 106, which is a hardware device for executing software, particularly software stored in the memory 108. The processor can be any custom made or commercially available general purpose processor, a central processing unit (CPU), a semiconductor based microprocessor (in the form of a microchip or chipset), a macroprocessor, microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art. Examples of suitable commercially available microprocessors are as follows: a PA-RISC series microprocessor from Hewlett-Packard Company, an 80x86 or Pentium series microprocessor from Intel Corporation, a PowerPC microprocessor from IBM, a Sparc microprocessor from Sun Microsystems, Inc., a 68xxx series microprocessor from Motorola Corporation, DSP microprocessors, or ARM microprocessors.

The memory 108 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD)). Moreover, the memory 108 may incorporate electronic, magnetic, optical and/or other types of storage media. The memory 108 can have a distributed architecture where various components are situated remote from one another but can also be accessed by the processor 106. Further, the memory 108 may be remote from the device, such as at a server or cloud-based system, which is remotely accessible by the computing device 100. The memory 108 is coupled to the processor 106, so the processor 106 can read information from and write information to the memory 108. In the alternative, the memory 108 may be integral to the processor 106. In another example, the processor 106 and the memory 108 may both reside in a single ASIC or other integrated circuit.

The software in the memory 108 includes an operating system 110 and an application 112. The software optionally further includes a document editing system (DES) 114 which may each include one or more separate computer programs. Each of these has an ordered listing of executable instructions for implementing logical functions. The operating system 110 controls the execution of the application 112 (and the DES 114). The operating system 110 may be any proprietary operating system or a commercially available operating system, such as WEBOS, WINDOWS®, MAC and IPHONE OS®, LINUX, and ANDROID. It is understood that other operating systems may also be utilized.

The application 112 includes one or more processing elements related to detection, management and treatment of user input (discussed in detail later). The software may also include one or more other applications related to handwriting recognition, different functions, or both. Some examples of other applications include a text editor, telephone dialer, contacts directory, instant messaging facility, computer-aided design (CAD) program, email program, word processing program, web browser and camera. The application 112, and the other applications, include program(s) provided with the computing device 100 upon manufacture and may further include programs uploaded or downloaded into the computing device 100 after manufacture.

The DES 114 may include handwriting-recognition capabilities with support and compliance capabilities, and may be a source program, executable program (object code), script, application, or any other entity having a set of instructions to be performed. When a source program, the program needs to be translated via a compiler, assembler, interpreter, or the like, which may or may not be included within the memory, to operate properly in connection with the operating system. Furthermore, the DES with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#. Alternatively, the DES 114 may be a method or system for communication with a handwriting recognition system, and/or a document editing system, remote from the device 100, such as server or cloud-based system, but is remotely accessible by the computing device 100 through communications links using the afore-mentioned communications I/O devices of the computing device 100. Further, the application 112 and the DES 114 may operate together or be combined as a single application.

Strokes entered on or via the input surface 104 can be processed by the processor 106 as digital ink. A user may enter a stroke with a finger or an instrument such as a pen or stylus suitable for use with the input surface. The user may also enter a stroke by making a gesture above the input surface 104 if technology that senses motions in the vicinity of the input surface 104 is being used, or with a peripheral device of the computing device 100, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the DES accommodates a variety of ways in which each object may be entered whilst being recognized as the correct or intended object.

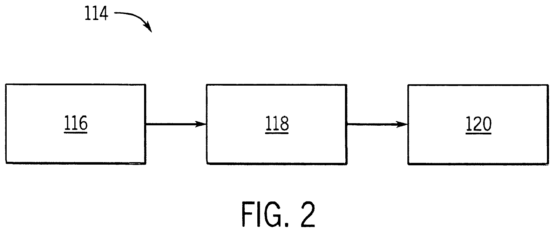

FIG. 2 is a schematic pictorial of an example of the DES 114, in either a local (i.e., loaded on the device 100) or remote (i.e., remotely accessible by the device 100) form. The DES 114 includes stages such as preprocessing 116, recognition 118 and output 120. The preprocessing stage 116 processes the digital ink to achieve greater accuracy and reducing processing time during the recognition stage 118. This preprocessing may include normalizing of the path connecting the stroke initiation and termination locations by applying size normalization and/or methods such as B-spline approximation to smooth the input. The preprocessed strokes are then passed to the recognition stage 118 which processes the strokes to recognize the objects formed thereby. The recognized objects are then output 120 to the display 102 generally as a typesetted version of the handwritten elements/characters.

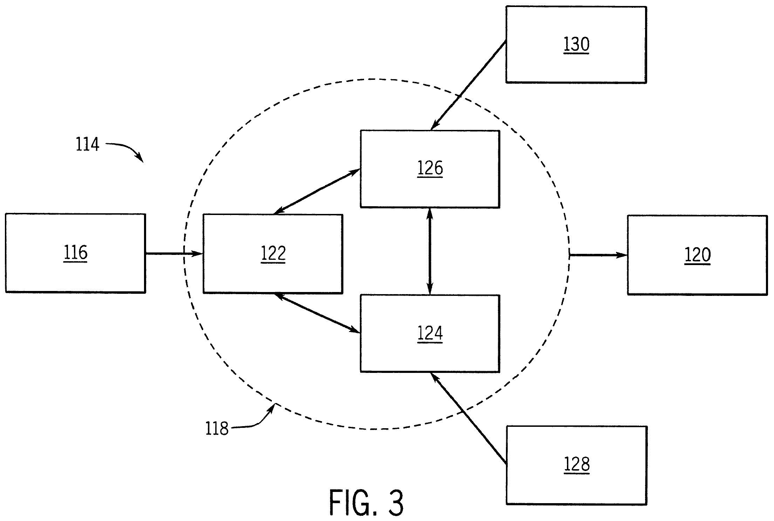

The recognition stage 118 may include different processing elements or experts. FIG. 3 is a schematic pictorial of the example of FIG. 2 showing schematic detail of the recognition stage 118. Three experts, a segmentation expert 122, a recognition expert 124 and a language expert 126, are illustrated which collaborate through dynamic programming to generate the output 120.

The segmentation expert 122 defines the different ways to segment the input strokes into individual element hypotheses, e.g., alphanumeric characters and mathematical operators, text characters, individual shapes, or sub expression, in order to form expressions, e.g., words, mathematical equations, or groups of shapes. For example, the segmentation expert 122 may form the element hypotheses by grouping consecutive strokes of the original input to obtain a segmentation graph where each node corresponds to at least one element hypothesis and where adjacency constraints between elements are handled by the node connections. Alternatively, the segmentation expert 122 may employ separate experts for different input types, such as text, drawings, equations, and music notation.

The recognition expert 124 provides classification of the features extracted by a classifier 128 and outputs a list of element candidates with probabilities or recognition scores for each node of the segmentation graph. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task.

The language expert 126 generates linguistic meaning for the different paths in the segmentation graph using language models (e.g., grammar or semantics). The expert 126 checks the candidates suggested by the other experts according to linguistic information 130. The linguistic information 130 can include a lexicon, regular expressions, etc. The language expert 126 aims at finding the best recognition path. In one example, the language expert 126 does this by exploring a language model such as finite state automaton (FSA) representing the content of linguistic information 130. In addition to the lexicon constraint, the language expert 126 may use statistical information modeling for how frequent a given sequence of elements appears in the specified language or is used by a specific user to evaluate the linguistic likelihood of the interpretation of a given path of the segmentation graph.

The present system and method can make use of aspects of the DES 114 in order to recognize handwritten inputs to the device 100. As mentioned earlier, the application 112 includes application(s) for handling the layout of the recognized user input. Such applications may be provided in an architecture with separate layers for handling different processing. One or more of these layers may be remote to the device 100 accessible via the communications channels mentioned earlier. The layers may include application wrapper(s), platform wrapper(s) and (platform specific) application user interface(s).

The application 112 provided by the present system and method allows users, such as students, academic and working professionals, to take handwritten notes, such as during lectures, meetings and brainstorming sessions, which they can transform into sharable formatted documents on their portable or non-portable computing devices using natural and intuitive operations, such as gestures. The application allows taking of 'clean' notes which can be searched and memorized properly using their computing devices. The present system and method further allow natural writing to be input since the writing is made on (ruled) lines, and paragraphs and other layout elements are respected responsive to orientation (i.e., portrait or landscape) and device display capacity. Synchronization of the captured notes between devices and auto-saving of notes are also supported, as are export options to various formats, such as a text, Latex, HTML, image, pdf, etc. These and other aspects are now described.

The application 112 utilizes a framework for the definition and handling of documents and document elements so as to provide structured content allowing layout definition and preservation. This document model handles different types of document elements, which are best described with HTML5 reference, for example, see W3C HTML5 DOM - Kinds of content: http://www.w3.org/TR/html5/dom.html#kinds-of-content. The document model utilized by the application 112 does not reproduce HTML specifications, rather it takes inspiration from them. A subset of the elements of the document model is flow, sectioning, heading, phrasing, embedded and interactive.

Users of existing digital note taking applications can have issues understanding how text behaves when editing, with text reflow and uncontrolled text/element position. In order to lower the learning curve for use of such applications, handwriting should be closer to what users are familiar with. That is, writing with keyboard in text editing software/web services and editing through keyboard and mouse interaction, with the same model and behaviors. Any digital device user is already accustomed to gesturing on screen to write or edit content. Gesturing is a natural and intuitive pattern on touch and hover devices. A quick solution in the handwritten note taking environment would be to just adapt presently used gestures, such a tap, double tap, press, long press, swipe, pinch, to allow editing in the digital note taking and document creation environment. While these gestures are generally intuitively provided for their existing functions on touch and hover devices, the Applicant has further found that this intuitiveness does not necessarily carry over well to content editing functions based on user feedback. Accordingly, the present system and method provides new classes of gesturing and behaviors for providing content editing functions. These and other features of the present system and method are now described in detail.

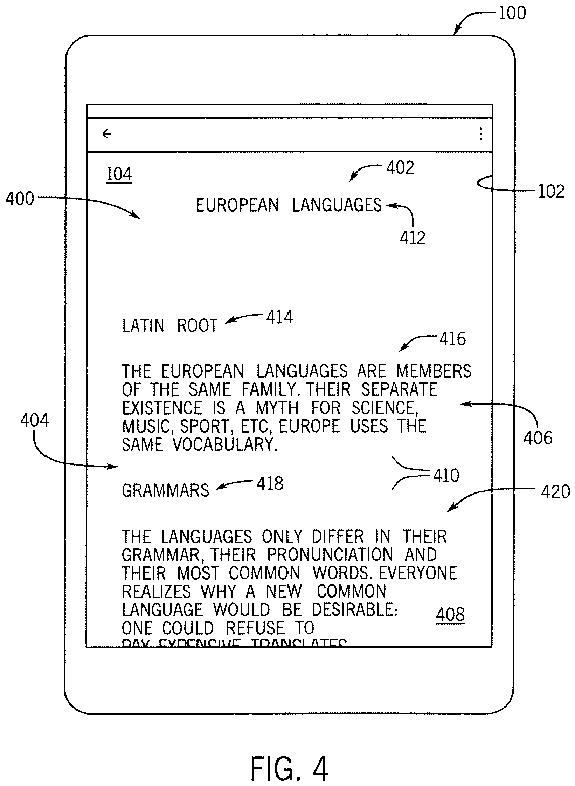

FIG. 4 shows a schematic view of an example visual rendering of a note taking page 400 on a portion of the input surface 104 of an example computing device 100. The page 400 is shown in editing view in which content entry and editing is performed. However, other views may be used for document structure editing and notebook navigation. Besides providing user interface (UI) controls (described later) the editing view provides a full-width page that overflows vertically from the display 102 of the device 100. The page 400 is of flexible height, in essence of infinite height, and can be vertically scrolled using well understood touch screen computing device gestures or non-touch screen computing device methods, such as a with a mouse. In order to maximize writing space for users (particularly on smaller devices), an empty scrollable page is defined to occupy at least the whole editing view height.

In an editing, conventional or full-page view (and other views as appropriate), several page elements are displayed including a top padding 402, a left margin 404 and a right margin 406. The padding and margins define an input area 408 which has a line pattern background 410. The line pattern 410 has horizontal lines separated by a multiple of the vertical rhythm height unit being the density independent pixel (dp). Regardless of the particular device 100, the vertical distance between the horizontal lines 410 is defined by a line pattern unit (LPU) and the vertical rhythm height unit provides a graduated measure of the LPU on a particular device. For example, the LPU may be set at about one centimeter for any device being a certain multiple of the vertical rhythm height unit or users may be allowed to customize the line pattern unit to a different multiple of the vertical rhythm height unit according to their writing style. Alternatively, the vertical rhythm may be based on typeset text size (e.g., the minimum text size) and the LPU is provided as a multiple of this typeset text size. All lines 410 are displayed with the same light and subtle color, e.g., grey, that is visible but faded with respect to the rendering of the content itself. In this way the line pattern is noticeable but unobtrusive so as to guide the handwriting input without distracting from the content entry. The line pattern background 410 is displayed in handwritten text context and serves multiple purposes:
- forces users to write onto it so that handwriting recognition is optimized
- helps users adopt regular vertical rhythm writing leading to same writing size and better block dimensions and positions
- helps users control line skipping to define paragraphs.

The top padding 402 is displayed on any new page or section and does not contain the line pattern background. This helps users write with proper vertical spacing, i.e., not too close from the interface 104 border and leaves room for other elements, such as section titling and tagging. The top padding 402 is defined by multiples of the LPU, e.g., in the example of FIG. 4 the top padding is two times the LPU. However, it may be desired to allow writing in the top padding for headings, e.g., document and section titles, annotations and the like. Similar bottom padding at the bottom of the input area 408 may also be provided.

The left and right margins 404 and 406 are displayed with vertical lines. In the example of FIG. 4 these lines are similar to the line pattern 410 in color and definition, however these lines may be more boldly displayed if desired. The vertical line margins are positioned from the corresponding left and right 'page' edges by multiples of the vertical rhythm unit. In some examples, the margins 404, 406 are not displayed in the top padding 402 and start from the first line pattern 410 horizontal line. However, the margins may extend into the top padding if desired. Further, the line pattern 410 is not displayed in the margin elements in order to discourage writing in these areas. However, it may be desired to allow writing in the margins for annotations and the like. Alternatively, the margins may only be displayed on hover-over or contact interaction with the horizontal extents of the page 400 or totally omitted, thereby, for example, relying on natural handwriting behaviors of users to not write too close to the screen/UI edges.

The input of handwritten content onto the page 400 is performed through the use of gestures in relation to the input surface 104, e.g., through touch, force and/or proximity depending on the screen technology of the device 100. Gesture detection may be handled differently depending on the ability of the computing device 100 to differentiate a users' finger from a stylus or pen (by which the device defines passive and active styli) or the ability of a stylus to indicate or communicate to the device that it is being used for handwriting or the ability of users to provide such an indication. By default, and in devices which do not differentiate, any single-point touch or hover event within the input area 408 is to be considered as content input or content interaction.

The scroll page can be provided as a constraint-free canvas that allows users to create object blocks (blocks of text, drawings, etc.) anywhere without worrying about sizing or alignment. However, in order to provide professionally formatted documents containing structured content, certain alignment elements or pattern may be defined onto which all content is to be aligned/defined (either at input or along user interaction). This allows blocks to be defined as that rendering of the blocks is responsive to the device size/orientation. An example alignment pattern and responsive display is described in United States Patent Application No. 14/886,195 titled "System and Method of Digital Note Taking" filed in the name of the present Applicant and Assignee, the entire content of which is incorporated by reference herein.

FIG. 4 further shows handwritten input rendered as digital ink. In particular, in the example of FIG. 4, there are shown five text objects 412, 414, 416, 418 and 420. The text object 412 is a text block containing words on a single line and defines a document or section title, for example. The text object 414 is a text block containing two words on a single line 410 spaced one line 410 from the block 412 and defines a section title or sub-title, for example. The text object 416 is a text block containing many words over multiple lines 410 with the first (topmost) line 410 spaced one line 410 from the block 414 and defines a (section) paragraph, for example. The text object 418 is a text block containing two words on a single line 410 spaced one line 410 from the bottommost line 410 of the block 416 and defines a section title or sub-title, for example. The text object 420 is a text block containing many words over multiple lines 410 with the topmost line 410 spaced one line 410 from the block 418 and defines a (section) paragraph, for example.

The document model defines sectioning content as content that defines the scope of headings and footers. Heading content defines the header of a section, whether explicitly marked up using sectioning content elements or implied by the heading content itself. A paragraph is typically a run of flow content that forms a block of text with one or more sentences, without any empty lines therebetween. Paragraphs may be any width (from single word to full width) depending on input length and position. At any time, the widest line of a paragraph defines its boundaries with potential consequences on the document model when new content is input. As long as all lines (but the last) are roughly the same width, the document model causes new content to be appended inline to the paragraph when typesetting reflow is performed. As discussed below, paragraphs are mainly created by skipping a line 410 between content input. When text is entered immediately before or after a paragraph without leaving an empty line, all new content is merged into the existing paragraph. All paragraphs may be split or merged with either content editing or gestures (described later).

As can be seen, the content of the text block 420 flows beyond the bottom of the input area 408 as displayed in FIG. 4. However, the content can be viewed (and input) through users scrolling the page 400 by single-point interaction (e.g., one-finger or stylus gesture touching or hovering over the interface 104) or multi-point interaction (e.g., two fingers touching or hovering over the interface 104 at about the same time) either anywhere on the input area or in a dedicated area(s), such as in one or more of the margins. When using a device that is able to differentiate finger from stylus, or a stylus which indicates its use to the device, or the user provides this indication, thus defining an active stylus for content input for example, multi-point interaction is not necessary and scrolling is available with a one-finger vertical scroll gesture anywhere on the interface surface 104, for example.

As mentioned above, the text blocks 412-420 are each separated by an empty line 410, e.g., a spacing of two LPUs. This simple constraint is placed on the input of separate paragraphs (and object blocks) in the vertical flow, in a manner which is easily understood and applied by users so that relative layout between object blocks in the vertical flow of the scroll page 400 can be cleanly maintained and applied to directly input content and dragged & dropped or pushed & dropped blocks. Benefits of this approach will become apparent from the following description of certain examples of editing provided by the present system and method. Alternatively or additionally however, such a constraint may not be required, particularly with the use of gestures to define styling, as described later.

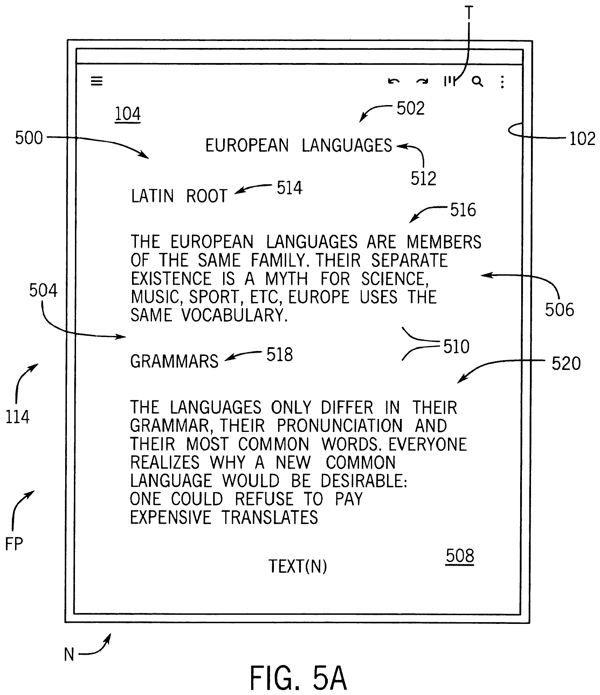

Turning to FIG. 5A, the DES 114 will be described in detail in conjunction with associated operations, text portions, user contact portions and user actions. FIG. 5A illustrates page N, shown in a full-page, or conventional, viewing and editing mode FP. Also shown are a top padding 502, a left margin 504, a right margin 506, an input area 508 having a line pattern background 510 and five text objects 512, 514, 516, 518 and 520. Properties of elements 502-520 are similar to corresponding elements in FIG. 4, and thus a description thereof will be omitted.

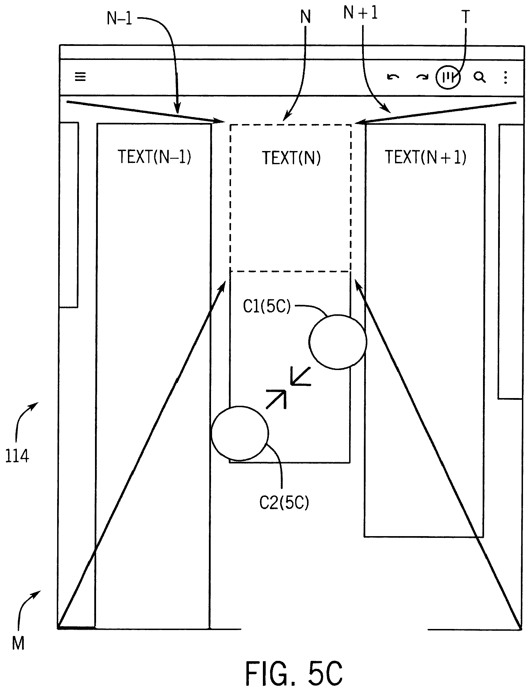

Further shown is text, or digital text, TEXT(N). Additionally, a transitioner T enables the transition between the full-page mode FP and a macro viewing mode M, or a macro mode, as exemplarily illustrated in FIG. 5C. It is to be understood that transitioner T can be a manipulable icon, an image, a number, a letter, an area of the display, a gesture or any other element able to transition between the macro mode M and the full-page mode FP at the command of a user or the DES 114.

Throughout this disclosure, the full-page FP mode can be a mode in which a single page occupies an entire input area of an application, an entire area of a display, a portion of a display, a portion of an entire input area of an application, or any other portion of a display, application or software window enabling full-page, or substantially full-page user inputs. It is further to be noted that the full-page FP mode need not occupy an entire display or an entire user input area, but rather can be any working or input area adapted to receive user inputs. Further, in some implementations, the full-page FP mode can display a single page, or an input area of a single page, with no other pages, or input areas thereof, being shown. Additionally, throughout this disclosure, the macro mode M can display one or more pages, or one or more input areas of the one or more pages.

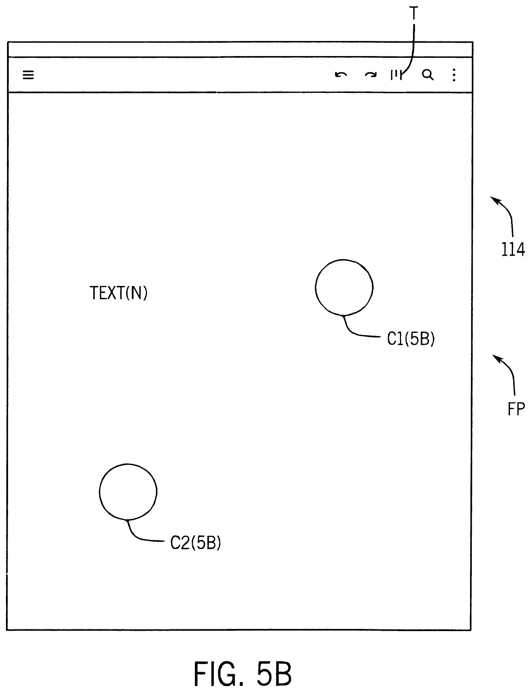

FIG. 5B illustrates contacts C1(5B) and C2(5B). Throughout this disclosure, a "contact" can be a point on the computing device 100 and/or display 102 touched by a user's finger, manipulator tool such as a stylus or selected by another input device such as a mouse or trackpad. Further, in this disclosure a "touch" can be performed by a user's finger, manipulator tool such as a stylus or selected by another input device such as a mouse or trackpad.

Turning to FIG. 5C, it can be seen that contacts C1(5C) and C2(5C) have been moved toward each other relative to C1(5B) and C2(5B). In other words, a user has touched the computing device 100 at contacts C1(5B) and C2(5B) and relatively moved the points of contact towards each other, as indicated by the locations of contacts C1(5C) and C2(5C). This can be done while the user maintains his or her touch with the computing device 100 while moving from C1(5B) to C1(5C) and from C2(5B) to C2(5C).

FIG. 5C shows DES 114 in a macro mode M, and the DES 114 can transition from the full-page mode FP to the macro mode M when the user maintains contact with the computing device 100 while moving from C1(5B) to C1(5C) and from C2(5B) to C2(5C). In macro mode M, as shown exemplarily in FIG. 5C, original page N is shown along with pages N-1 and N+1, where only page N was viewable in the FP mode of FIGS. 5A and 5B. Pages N-1 and N+1 each include respective exemplary text TEXT(N-1) and TEXT(N+1). In some implementations, the described transition from full-page mode FP to macro mode M only occurs when the motion, or touch motion, from C1(5B) to C1(5C) and from C2(5B) to C2(5C) is greater than a pre-determined threshold of motion distance and/or motion speed. This threshold can be calculated as pre-determined values, or as a function of the computing device 100 or the DES 114, or can be a dynamic or customizable value.

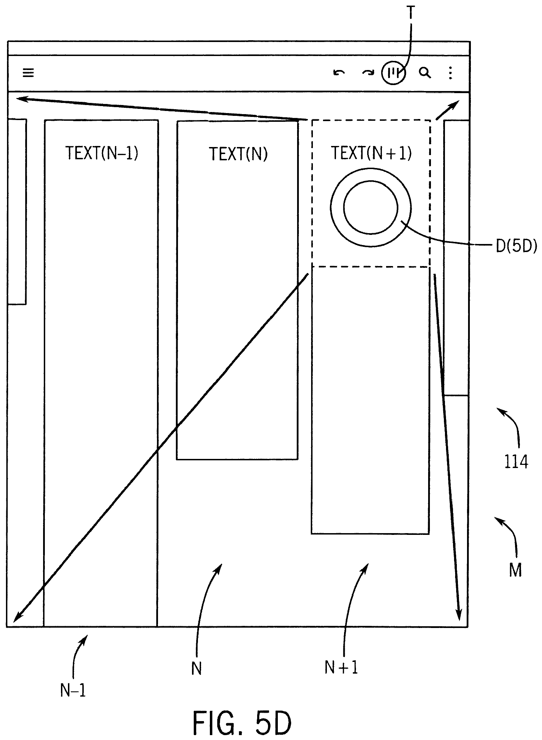

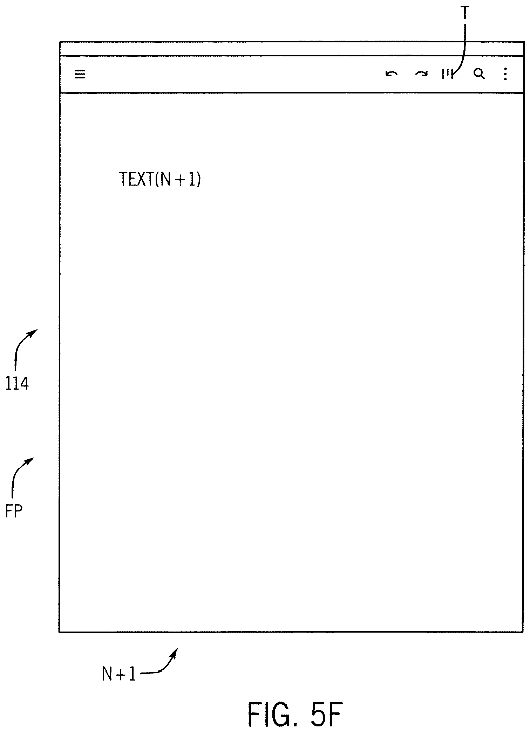

FIGS. 5D-5F illustrate a transition from the macro mode M to the full-page mode FP. FIG. 5D illustrates double action D(5D). Throughout this application, a double action can refer to a plurality of actions, or two actions, contacts and/or touches, taken by a user in a certain time period and/or within a certain geometrical or relative distance on the computing device 100. For example, such a double action can include the user touching a portion of the computing device 100 twice within a certain time period and/or certain relative distances between the contacts and/or touches. In FIG. 5D, it can be seen that double action D(5D) occurs within, substantially within or proximate the image of page N+1 in the macro mode M, and this action can cause page N+1 to open in full-page FP mode. Such a full-page FP mode, showing page N+1, is illustrated in FIG. 5F.

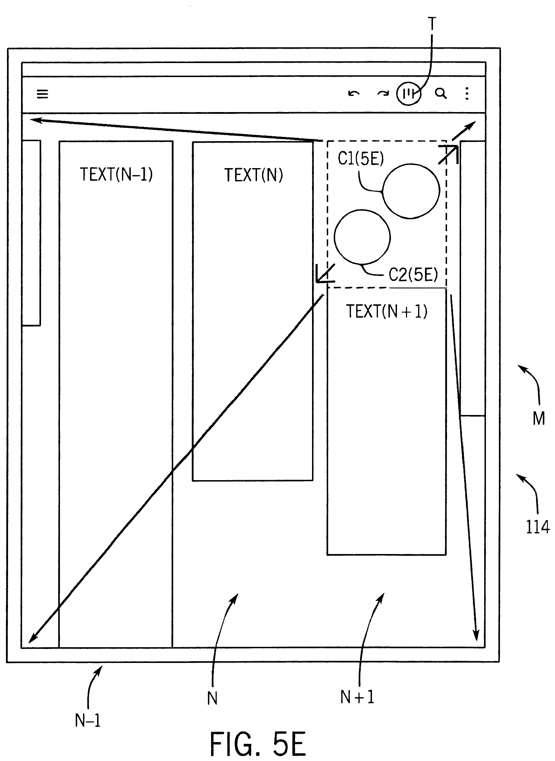

Turning to FIG. 5E, contacts C1(5E) and C2(5E) are illustrated, and each contact point C1(5E) and C2(5E) is located within, substantially within or proximate the image of page N+1 in macro mode M. It can be seen, as indicated by respective arrows, that the contacts C1(5E) and C2(5E) are moved relatively apart from each other, and such a motion, or a touch motion, can be conducted while a user maintains his or her touch with the computing device 100 from the initial contacts C1(5E) and C2(5E) as they are moved apart from one another.

Accordingly, in the manners described in FIGS. 5D and 5E, the DES 114 can transition from the macro mode M to the full-page mode FP. Of course, such a transition can also be made through the transitioner T. In some implementations, the user of the transitioner T can open a page centered in macro mode M, or a page last edited in macro mode M, in the full-page mode FP.

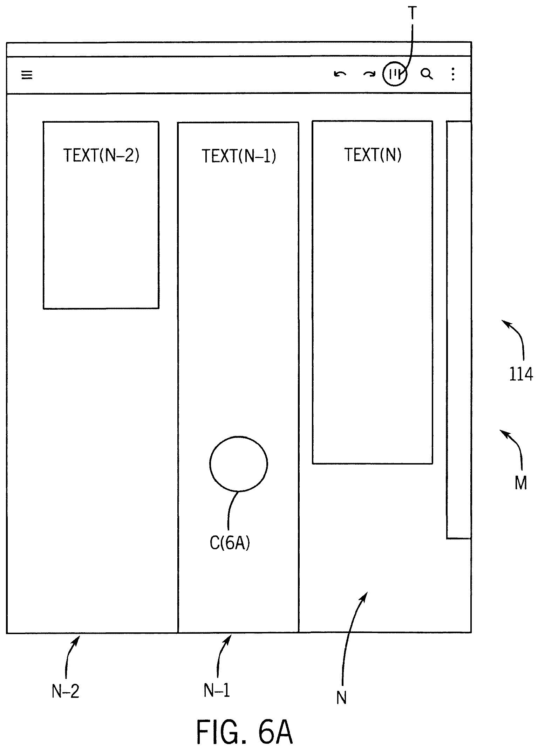

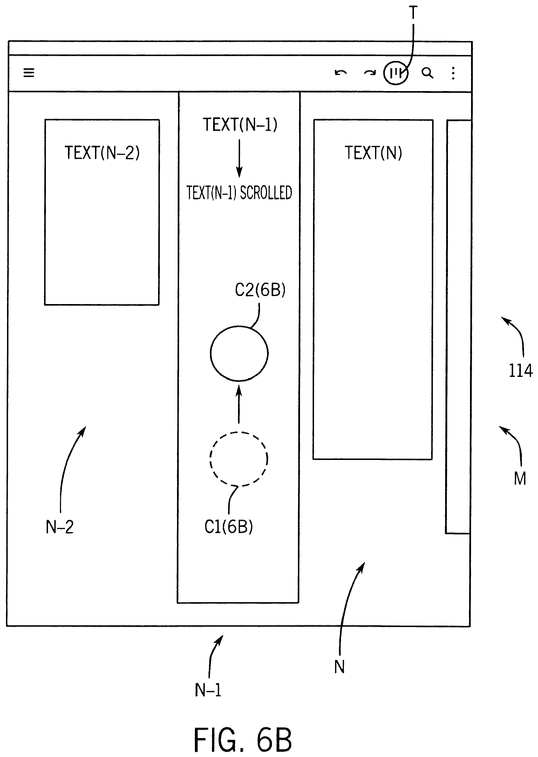

FIGS. 6A and 6B illustrate a process of vertically-scrolling text within a given page in the macro mode M in accordance with exemplary implementations of the present disclosure. FIG. 6A shows contact C(6A) located within, substantially within or proximate the image of page N-1 within macro mode M. FIG. 6B illustrates phantom contact C1(6B) and C2(6B), where C1(6B) corresponds to a contact location of C1(6A). FIG. 6B illustrates a movement from C1(6B) to C2(6B). FIG. 6B also illustrates TEXT(N-1), also shown in FIG. 6A, and further illustrates TEXT(N-1)SCROLLED. In some implementations, the user moving the contact from C1(6B) to C2(6B) causes a movement of TEXT(N-1) to TEXT(N-1)SCROLLED within the image of page N-1 in the macro mode M. Such a movement of TEXT(N-1) to TEXT(N-1)SCROLLED can occur only in a vertical direction in connection with a vertical component of the movement from C1(6B) to C2(6B), although other correlations are within the scope of this disclosure.

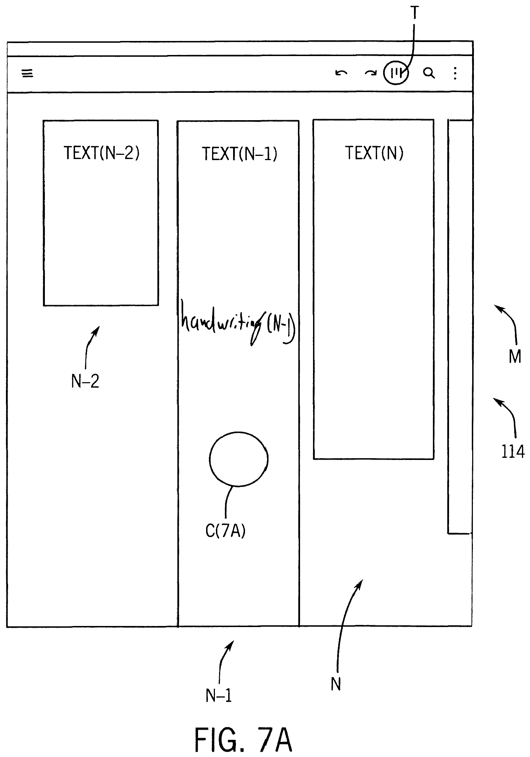

FIGS. 7A to 7C illustrate a process of converting a handwriting input into digital ink text in a page within the macro mode M and further editing the digital ink text in accordance with exemplary implementations of the present disclosure.

Turning to FIG. 7A, a user can touch the image of page N-1 in the macro mode M at contact C(7A). This directs the DES 114 to page N-1. A handwriting input (handwriting(N-1)) can then be entered, by a user, into page N-1. The handwriting(N-1) can be input with any form of touch, as described above, or through other input methods such as verbal commands.

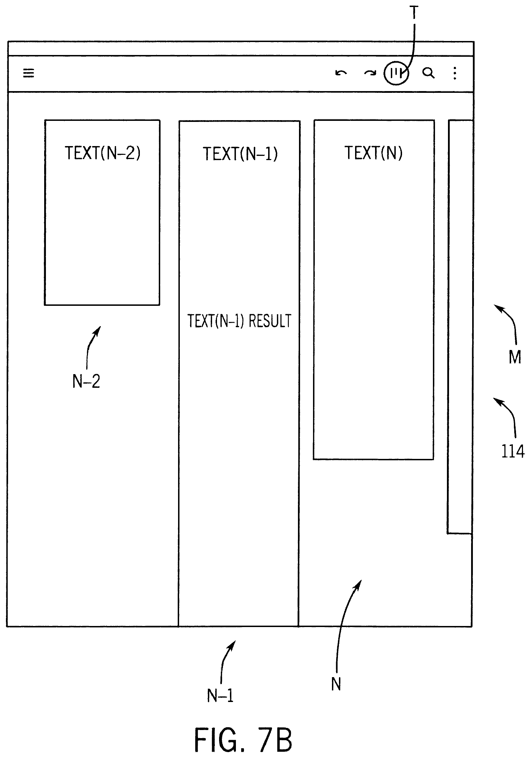

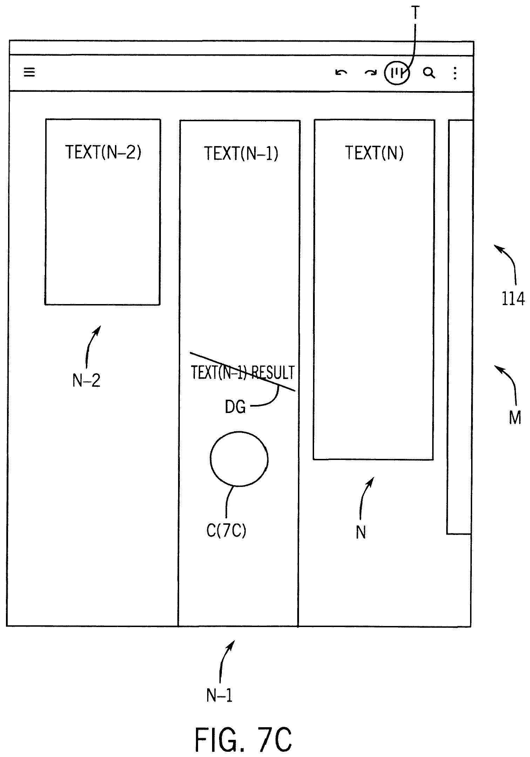

Following the selection of page N-1 in the macro mode M and the input of the handwriting(N-1), the DES 114 recognizes the handwriting(N-1) as digital ink text, as described above, and adds digital ink text TEXT(N-1)RESULT to page N-1, which is visible in macro mode M, as best shown in FIG. 7B. Turning to FIG. 7C, a user touches the image of page N-1 in macro mode M at contact C(7C), directing the DES 114 to page N-1. The user then completes, or touches, a deletion gesture DG over the TEXT(N-1)RESULT. As a function of the deletion gesture DG, the DES 114 removes TEXT(N-1)RESULT from page N-1.

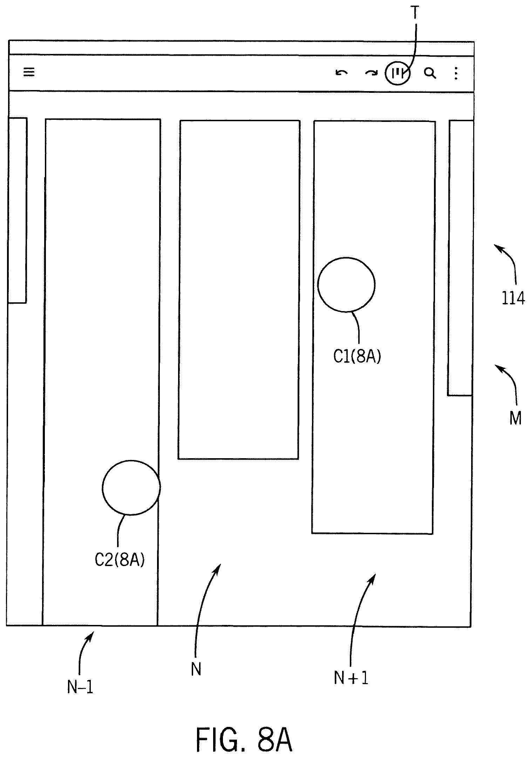

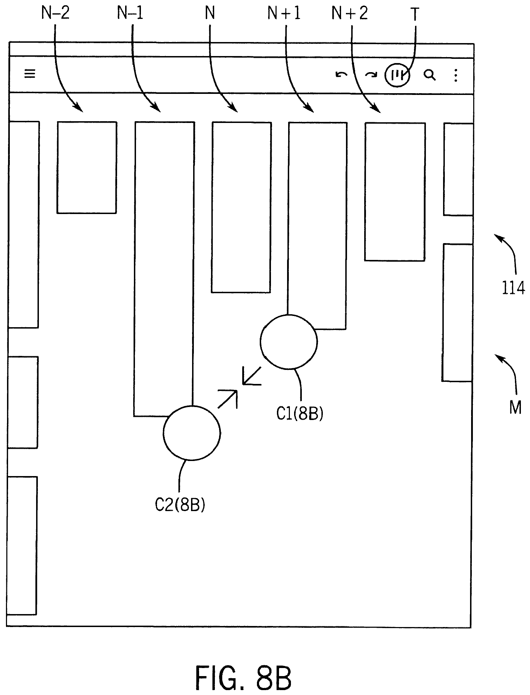

FIGS. 8A to 8D illustrate a process of zooming within macro mode M in accordance with exemplary implementations of the present disclosure. Turning to FIG. 8A, a user contacts the computing device 100 at C1(8A) and C2(8A) in the macro mode M. In some implementations, the points C1(8A) and C2(8A) are moved relatively closer to each other, or towards, to or substantially to the locations of C1(8B) and C2(8B) in FIG. 8B, and a greater number of pages become visible in macro mode M and/or the sizes of the images of each page is decreased in FIG. 8B relative to those of FIG. 8A. For example, the size of the image of page N-1 decreases from FIG. 8A to FIG. 8B, and the image of page N-2 becomes visible in FIG. 8B, whereby page N-2 is not visible in FIG. 8A.

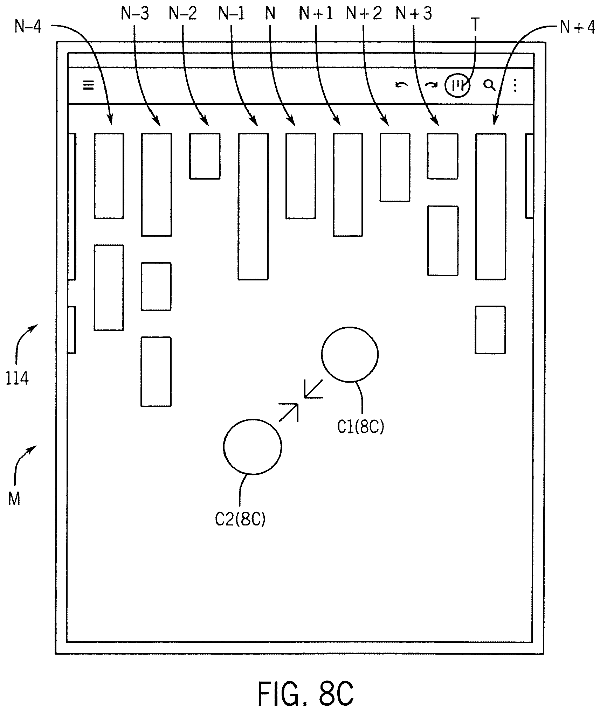

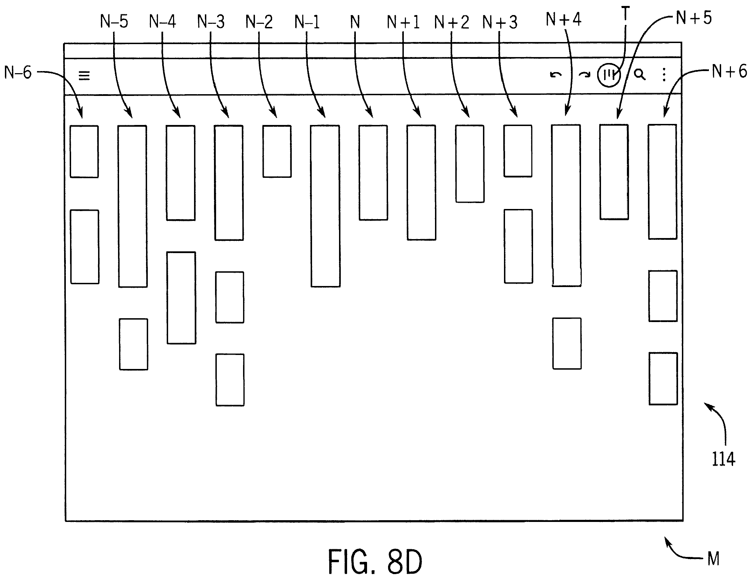

In some implementations, the points C1(8B) and C2(8B) are moved relatively closer to each other, or towards, to or substantially to the locations of C1(8C) and C2(8C) in FIG. 8C, and a greater number of pages become visible in macro mode M and/or the sizes of the images of each page is decreased in FIG. 8C relative to those of FIG. 8B. In some implementations, the points C1(8C) and C2(8C) are moved relatively closer to each other, and a greater number of pages become visible in macro mode M and/or the sizes of the images of each page are decreased in FIG. 8D relative to those of FIG. 8C.

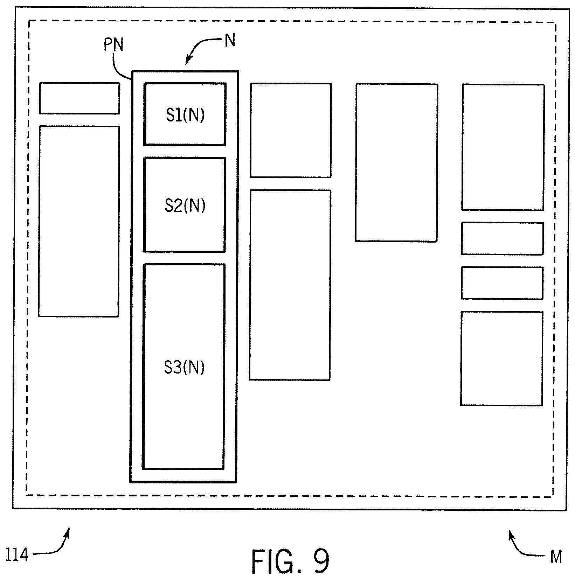

FIG. 9 illustrates the macro viewing mode M in accordance with exemplary implementations of the present disclosure, in particular showing multiple sections S within individual page N. In particular, page N is illustrated in its entirety within the box labeled PN. Further, within page N, sections S1(N), S2(N) and S3(N) are visible. Sections can include, or be comprised of, text, images, numbers, charts, portions of a page devoid of content or any other content grouped together as a section S. As will be described, below, a section S can be edited, removed, added and or moved within the macro mode M of the DES 114. It is to be understood that successive sections S within a single page can be arranged vertically in sequential order, and can be designated as S1(N), S2(N), S3(N), etc., indicating first, second and third sections on a given page N.

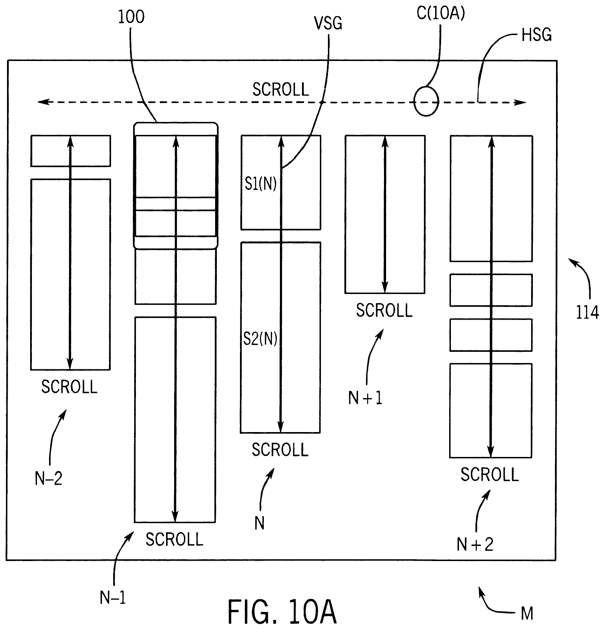

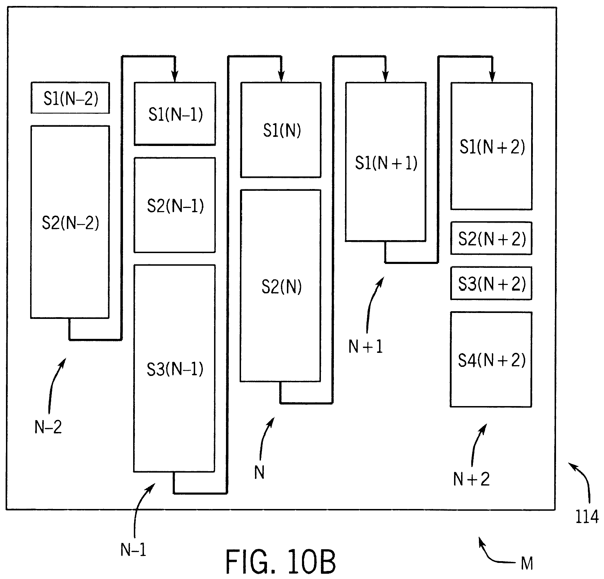

FIGS. 10A and 10B illustrate vertical scrolling within a single page among multiple sections therein and a continuous content flow among individual pages in accordance with exemplary implementations of the present disclosure. Turning to FIG. 10A, as described above with vertical scrolling in a given page N-1, the arrows in FIG. 10A indicate that a given page, for example page N, can be vertically scrolled among multiple sections S1(N) and S2(N) within page N. In other words, section S1(N) can be vertically scrolled and continuous scrolling, upon reaching a bottom of section S1(N), begins scrolling from the top of section S2(N). This scrolling between sections can be a function of a single continuous scrolling motion, or a gesture or touch gesture, also called a vertical scrolling gesture VSG. Each page can scroll among sections therein when the DES 114 is directed to that particular page, and/or all pages can scroll vertically in the macro mode M when the DES 114 is not directed to a particular page.

Also shown in FIG. 10A is functionality of the DES 114 enabling horizontal scrolling among pages in macro mode M. Such horizontal scrolling can be a result of a horizontal scrolling gesture HSG, such as a swiping gesture having a horizontal component, and further can be following a user touch at contact C(10A). The user touch at contact C(10A) can initiate the horizontal scrolling gesture HSG. It is to be understood that C(10A) can be located in an image of a page in the macro mode M, or in an area of the macro mode devoid of a page image. Pages visible in the macro mode M, and/or other pages not visible in the macro mode M, can also be horizontally-scrollable in the macro mode M via the horizontal scrolling gesture HSG.

Turning to FIG. 10B, an overall content flow of a document is shown. In particular, a flow of content can start at a first page, for example page N-1, at section S1(N-1), continue to section S2(N-1), and then continue to sections S1(N) and S2(N) of page N, and to subsequent sections and pages in a similar manner.

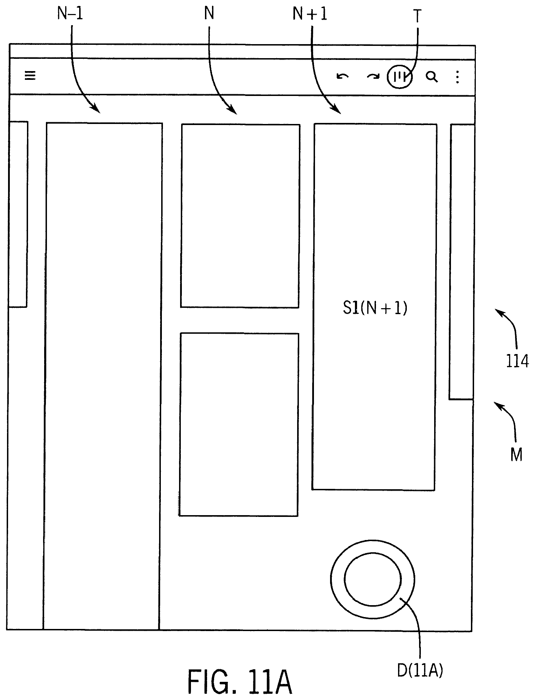

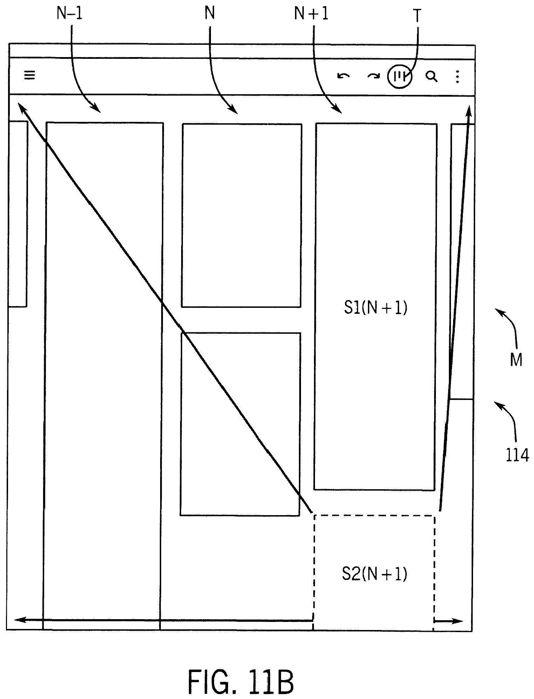

FIGS. 11A and 11B illustrate a process for adding a new section to a page according to exemplary implementations of the present disclosure. Turning to FIG. 11A, double action D(11A) is illustrated. It can be seen that double action D(11A) occurs, or contacts, substantially below all current sections (S1(N+1)) of page N+1. As shown schematically in FIG. 11B, a new section S2(N+1) can be created, and further the page N+1 and/or the section S2(N+1) can be opened in the full-page mode FP. Further, the new section S2(N+1) can be created, and further the page N+1 and/or the section S2(N+1) can be opened in the full-page mode FP as a result of the double action D(11A).

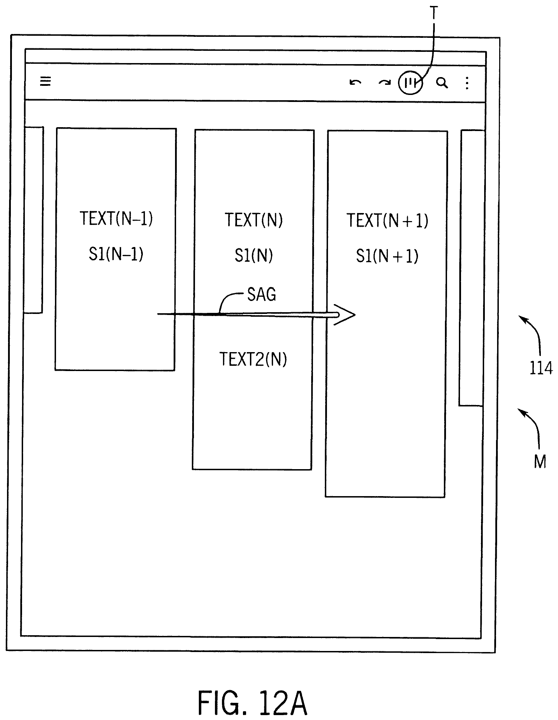

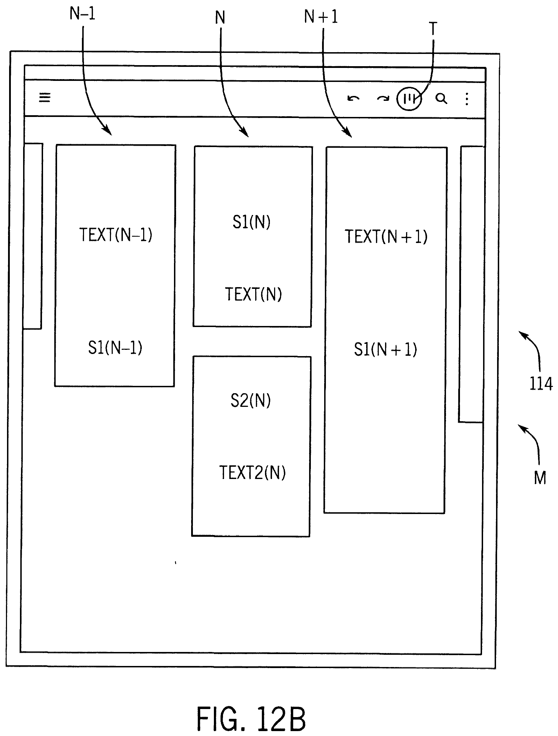

FIGS. 12A to 12D illustrate processes of splitting a section into multiple sections and moving sections to a new page according to exemplary implementations of the present disclosure. Turning to FIG. 12A, a section addition gesture SAG is shown in macro mode M, and the SAG can be formed by a user touch gesture, such as a swiping gesture. It can be seen that the SAG travels through at least a portion of section S1(N) on page N. As a result of the SAG, section S1(N) on page N in macro mode M is divided into two sections: S1(N) and S2(N). Further, in some implementations, the section S1(N) can be divided into the two sections about a location defined, or substantially defined by the SAG, such that content located above, or substantially above, the SAG is grouped into new S1(N) and content located below, or substantially below, the SAG is grouped into new S2(N). For example, as the SAG passes between TEXT(N) and TEXT2(N) in S1(N) of FIG. 12A, section S1(N) includes TEXT(N) and section S2(N) includes TEXT2(N) in FIG. 12B.

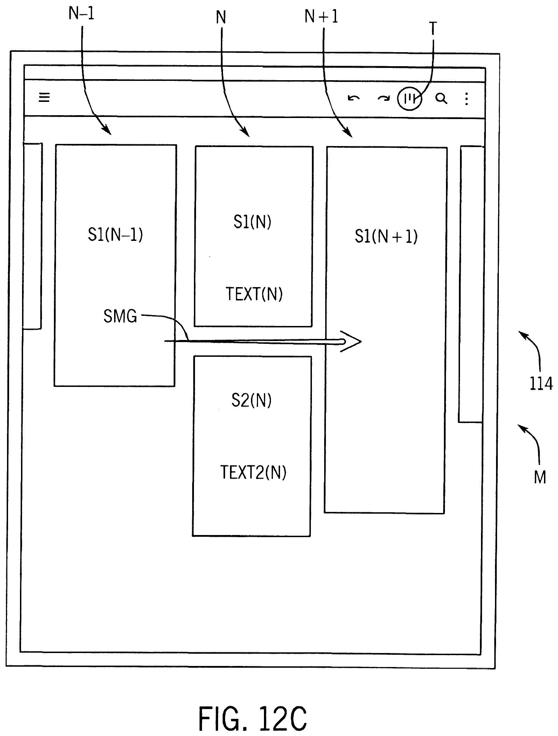

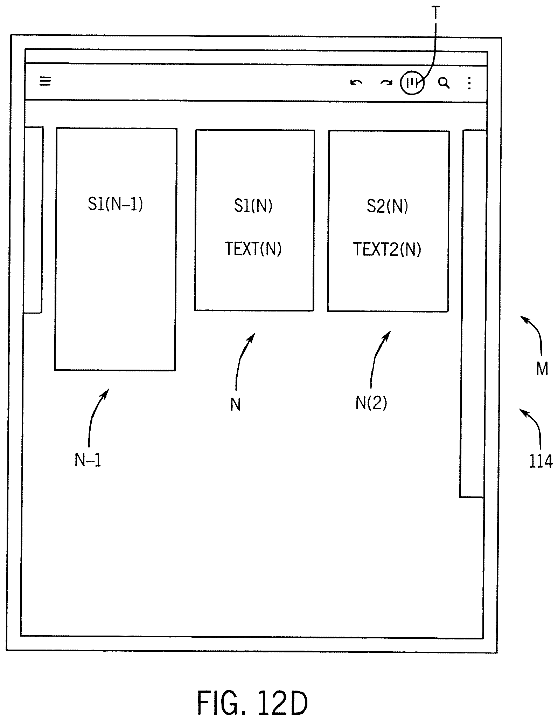

Turning to FIG. 12C, a section movement gesture SMG is shown in macro mode M. A portion of section movement gesture SMG passes between, or substantially between, existing sections S1(N) and S2(N), and the section movement gesture SMG further can progress in a substantially left-to-right direction. The section movement gesture SMG can cause all sections in a given page below, or substantially below, the portion of the section movement gesture SMG passing between existing sections to move to a new page following the page on which the section originally appeared. Further, such an action can cause all pages after the new page created by the section movement to move back one page. For example, section movement gesture SMG passes between section S1(N), containing TEXT(N), and section S2(N), containing TEXT2(N) in FIG. 12C. It can be seen in FIG. 12D that section S2(N) has moved to a new page N(2), as a result of the section movement gesture SMG. Further in FIG. 12D, it can be seen that former page N+1 of FIG. 12C has been moved back to a higher-numbered page to accommodate for new page N(2) in FIG. 12D.

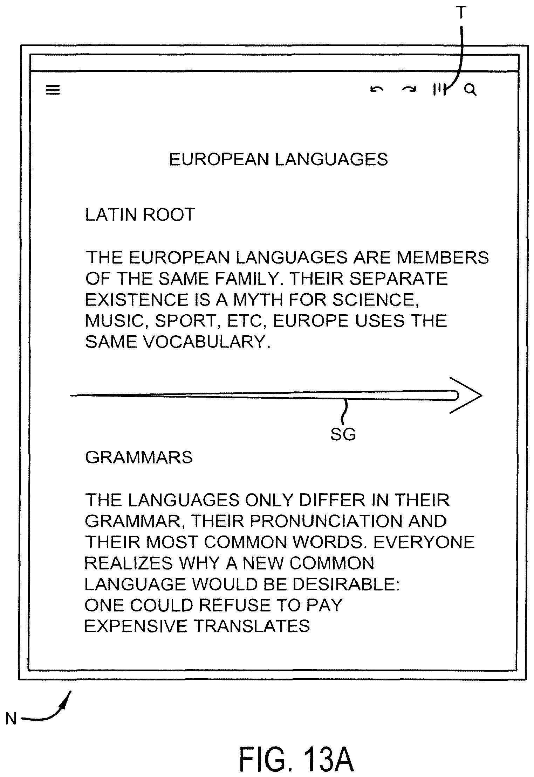

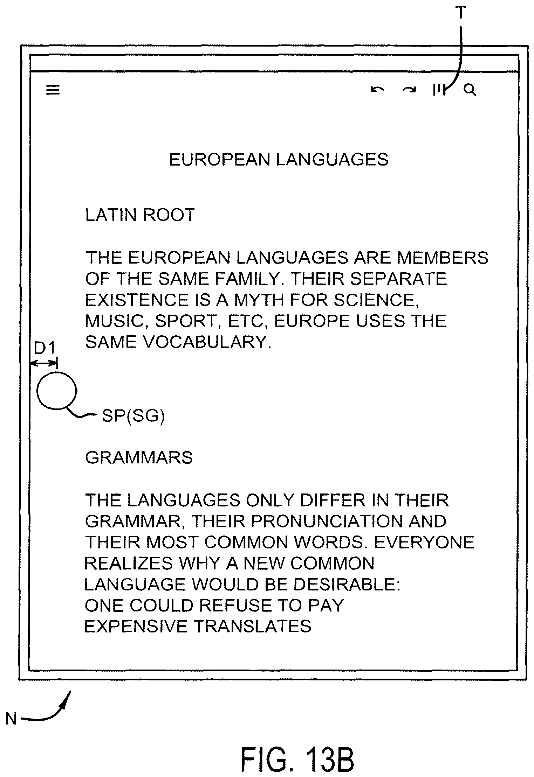

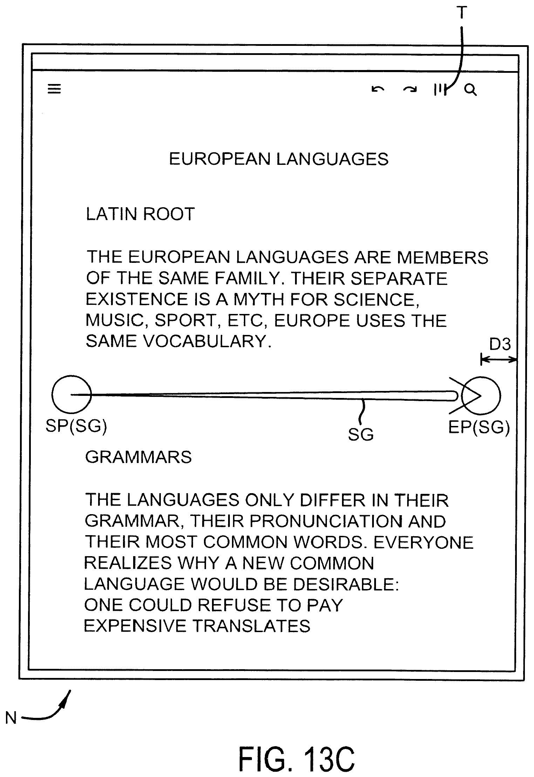

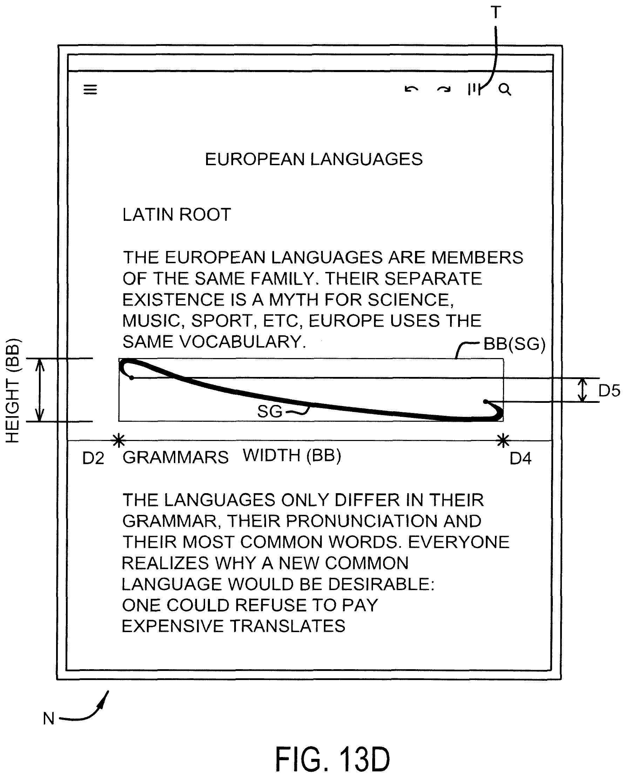

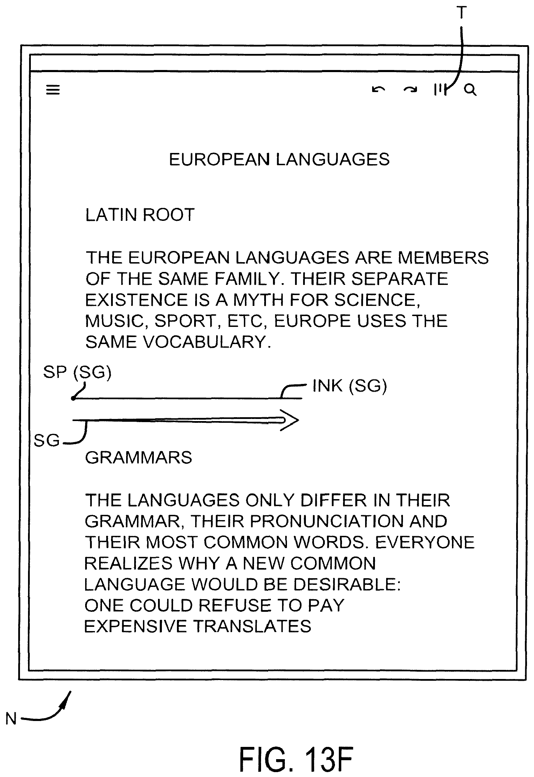

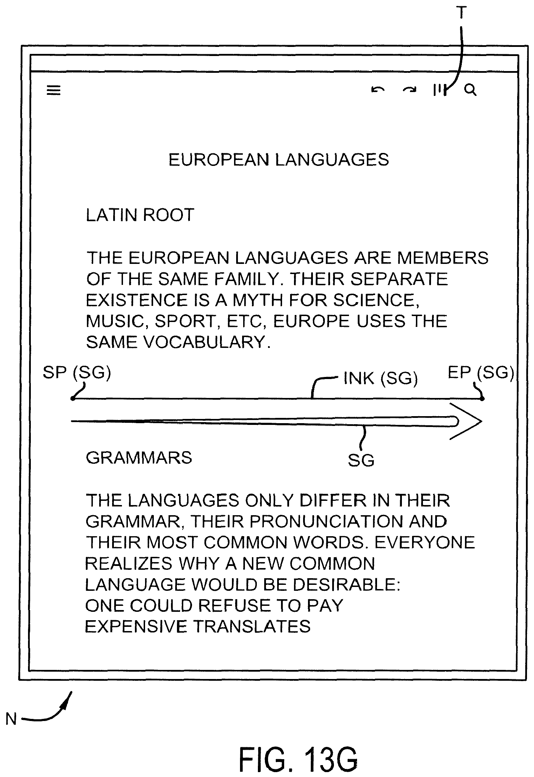

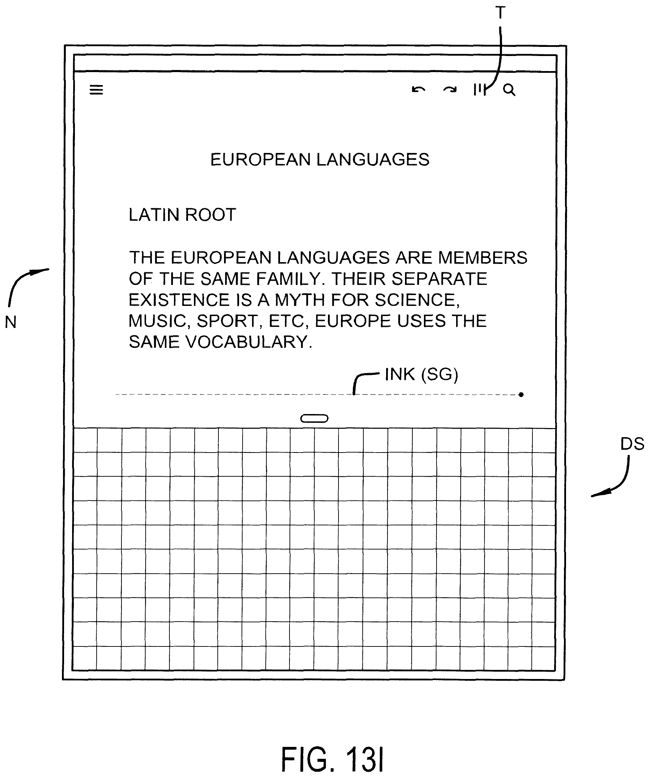

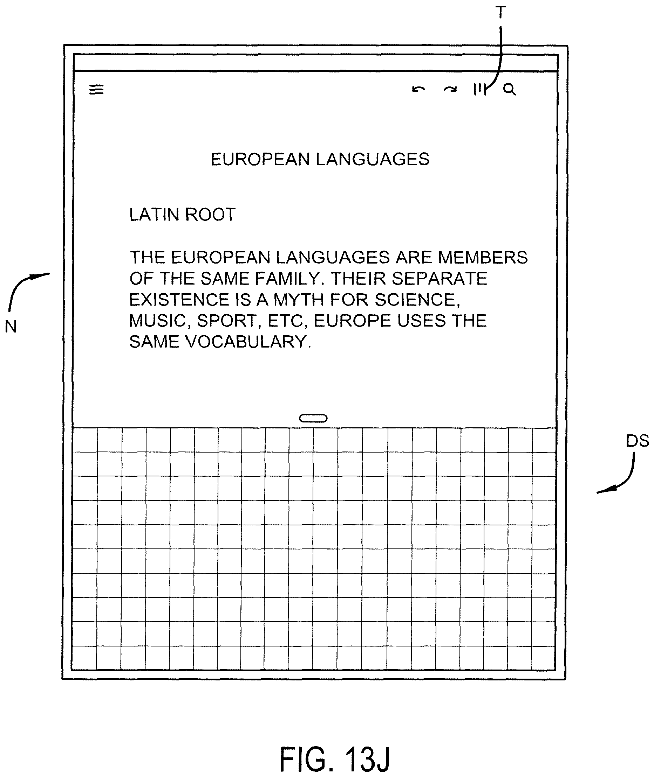

As shown in FIGS. 13A-13J, it is also possible to split a section or page into multiple sections or pages when the DES 114 is in the full-page mode FP. Turning to FIG. 13A, a slice gesture SG is shown in full-page mode FP. The slice gesture SG is a stroke recognized by the DES 114 as comprising three separate steps: a start point SP(SG), a gesture, and an end point EP(SG). The start point SP(SG) of the SG may be the first point of the stroke which is generally located on one side of the display, page, or section, as shown in FIG. 13B. The end point of the SG may be the final point of the stroke, which is typically located on an opposite side of the display, page, or section, as shown in FIG. 13C. Depending on user input, the start point SP(SG) may be determined by the DES 114 based on either the distance from the side of the display to the first point of the gesture SG, as shown by distance D1 in FIG. 13B, or the distance from the side of the display to the border of a bounding box BB(SG), as shown by distance D2 in FIG. 13D. Similarly, the end point EP(SG) may be determined based on either the distance from the side of the display to the last point of the gesture SG, as shown by distance D3 in FIG. 13C, or the distance from the side of the display to the border of a bounding box BB(SG), as shown by distance D4 in FIG. 13D. Accordingly, as shown in FIG. 13D, a width of the gesture is determined by the length of the stroke as measured either by a distance from the start point SP(SG) to the end point EP(SG) or by the width WIDTH(BB) of the bounding box BB(SG). Similarly, as shown in FIG. 13D, a height of the gesture may be determined by a height component D5 of the distance from the start point SP(SG) to the end point EP(SG) or by the height HEIGHT(BB) of the bounding box BB(SG).

In addition to a width and height of the slice gesture SG, the gesture may additionally have a corresponding direction and speed. A direction of the slice gesture SG may be computed by the DES 114 based upon the position of a point on the slice gesture and a timestamp for the particular point on the gesture. Generally, the direction of the slice gesture points toward a most recent point or set of points in the slice gesture. That is, assuming that the start point SP(SG) and points on the slice gesture closer to the start point appear later in time than the end point EP(SG) and points on the slice gesture closer to the end point, the direction will generally correspond to a direction starting at the start point and pointing toward the end point. Furthermore, a speed of the slice gesture SG may be calculated using the position of each point on the gesture and a corresponding timestamp for each point or set of points.

In order to ensure that the user input corresponds with a slice gesture (as opposed to another gesture discussed herein or otherwise), the DES 114 may perform validation procedures on suspected slice gestures according to four separate criteria: the width of the slice gesture, the height of the slice gesture, the direction of the slice gesture, and the speed of the slice gesture. For example, the DES 114 may be programmed to accept as a slice gesture only those gestures in which the width of the gesture is greater than 120mm or 80% of the display. Additionally, the validation criteria may require that the height of the slice gesture be less than two LPUs. Furthermore, the validation criteria may require that the direction of the gesture be substantially from the left side of the display to the right side of the display. Additionally, the DES 114 may require that a gesture be within a pre-defined speed or speed range in order to register as a slice gesture. These criteria are exemplary and it is anticipated that other validation criteria may be implemented in accordance with other implementations of the present disclosure.

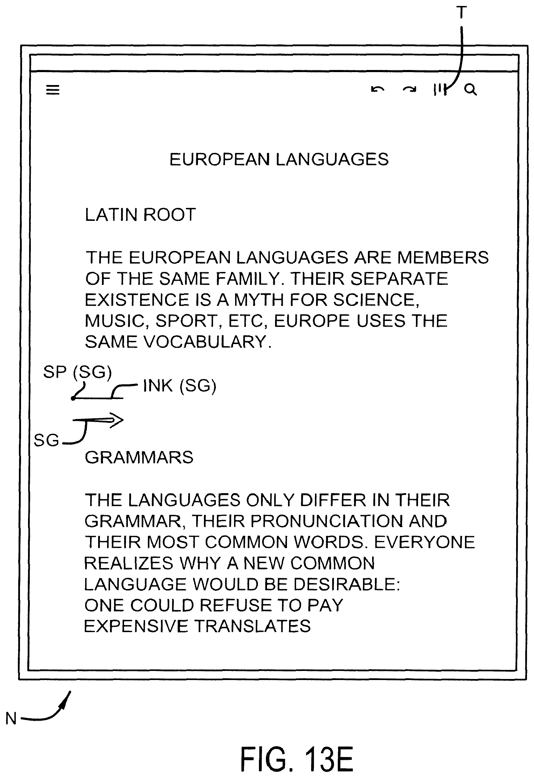

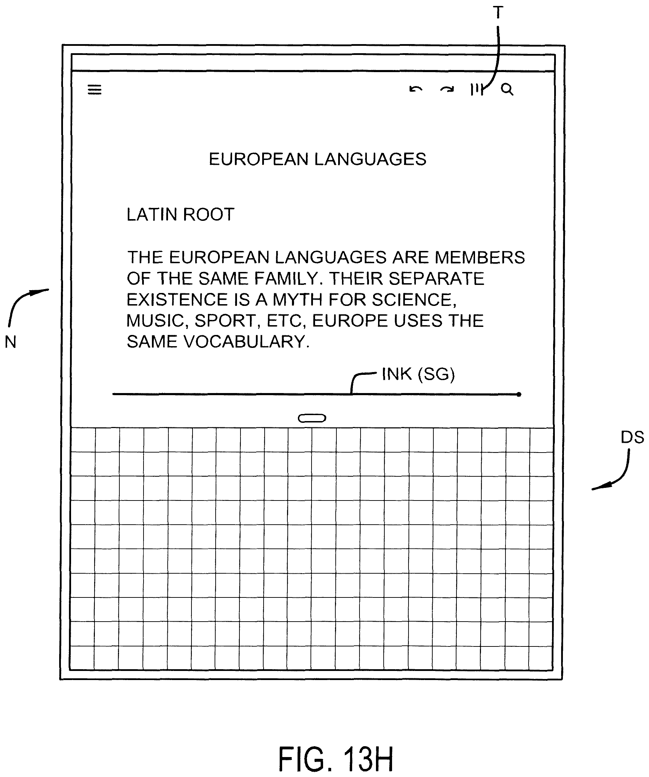

In some embodiments, the slice gesture may be accompanied by visual feedback to the user in the form of an ink stroke INK(SG) which generally follows the input of the user. As shown in FIGS. 13E-13G, the ink stroke INK(SG) generally traces the user input from the start point SP(SG) along the stroke to the end point EP(SG). Though shown in FIGS. FIGS. 13E-13G as appearing above slice gesture SG, ink stroke INK(SG) appears in generally the same points as slice gesture SG and is shown above for the purposes of FIGS. 13E-13G only. Once the user input in a particular portion of the input area 408 ceases or the gesture is validated as a slice gesture, the ink stroke INK(SG) may, for example, gradually or quickly fade and disappear, as shown in FIGS. 13H-13J according to criteria set by the DES 114. Other ways to visibly dismiss the ink stroke INK(SG) may be possible. For example, a technique known as "morphing" may be used to progressively transform the ink stroke's shape into the new section itself or into a separator between the two sections.

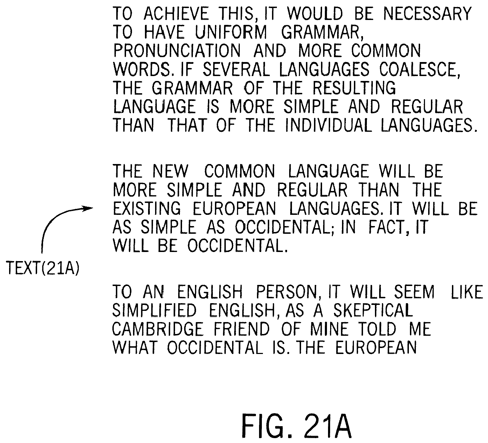

Once a slice gesture is validated, the DES 114 may perform one or more actions according to default or user selected criteria. Exemplary actions include the creation of a draft section DS, as shown in FIGS. 13H-13J. The draft section DS may be a pre-defined section or may be defined by the user subsequent to the slice gesture SG. Some draft section types are provided in FIGS. 21A-21C and corresponding descriptions, though others are anticipated. The use of a slice gesture SG to create a new draft section DS provides faster access than using an action menu, which helps keep the user focused on content creation and also helps the user avoid distractions that may arise while navigating an action menu.

Additionally, the slice gesture may be used to create a new section below the slice gesture SG, similar to the functionality shown in FIGS. 12A and 12B and corresponding description. Alternately, a new page can be created below the slice gesture SG, similar to the functionality shown in FIGS. 12A-12D arid corresponding description. If either a new section is created, the new section may be the same or a different type of section the original section. That is, the original section may be tailored to display text and the new section may be tailored to display both text and images. Similarly, the creation of a new page may be the same or different page type as that of the original page. The different types of sections and pages are discussed in more detail with respect to FIGS. 21A-21C and corresponding descriptions.

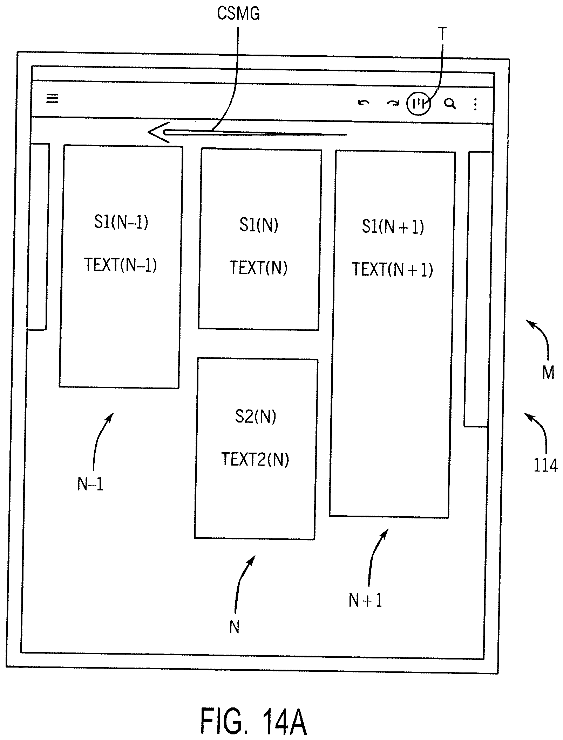

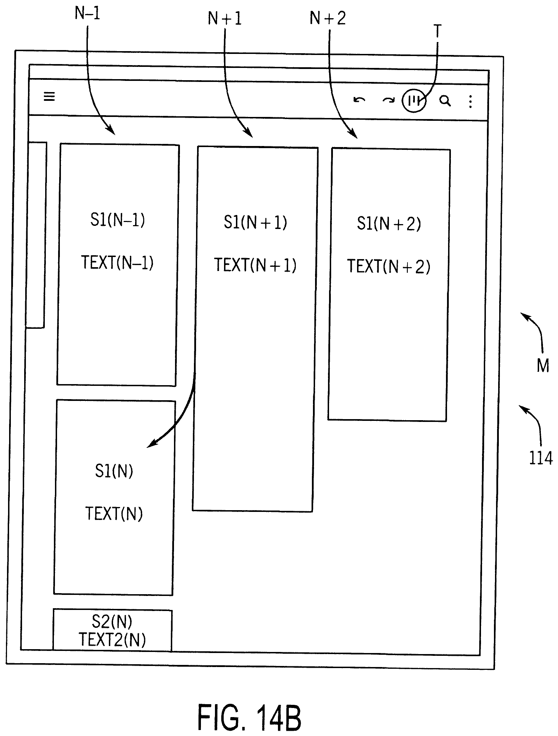

Turning back to macro mode M, FIGS. 14A and 14B illustrate a process of moving sections to a previous page according to exemplary implementations of the present disclosure. Turning to FIG. 14A, a combining section movement gesture CSMG is shown in macro mode M. A portion of combining section movement gesture CSMG passes above, or substantially above, existing section S1(N), which is the first and top section in page N, and the combining section movement gesture CSMG can progress in a substantially right-to-left direction. The combining section movement gesture CSMG can cause all sections in a given page below, or substantially below, the portion of the combining section movement gesture CSMG passing above a top section of a page to move to, and to be added to, the bottom of a previous page from the page on which the sections originally appeared. Further, such an action can cause all pages after the page on which the sections originally appeared to move back, or left, one page, or to a lower-numbered page. For example, combining section movement gesture CSMG passes above section S1(N), containing TEXT(N) and also above section S2(N), containing TEXT2(N) in FIG. 14A. It can be seen in FIG. 14B that sections S1(N) and S2(N) have moved to page N-1, which immediately preceded page N on which the S1(N) and S2(N) originally appeared as a result of the combining section movement gesture CSMG. Further in FIG. 14B, it can be seen that former page N+1 of FIG. 14A has been moved left one page to accommodate for sections S1(N) and S2(N) being moved to page N-1 in FIG. 14B.

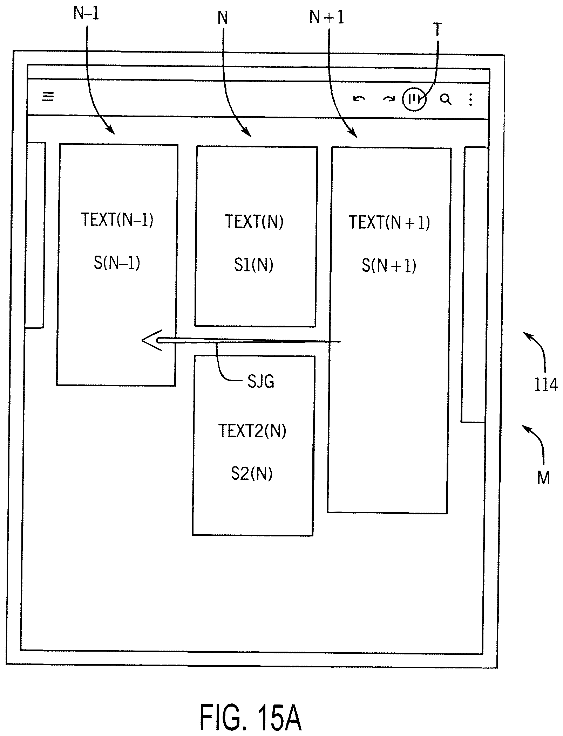

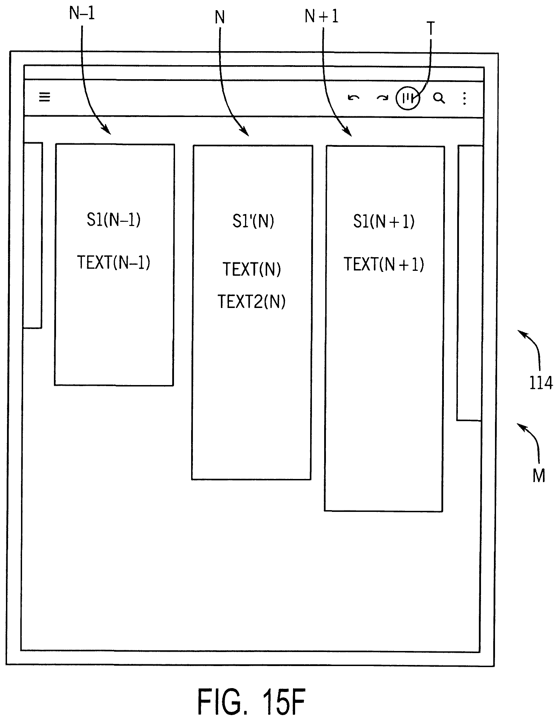

FIGS. 15A to 15F illustrate processes of combining multiple sections into a single section according to exemplary implementations of the present disclosure. Turning to FIG. 15A, an implementation of a section joining gesture SJG is shown in macro mode M. A portion of section joining gesture SJG passes between, or substantially between, existing sections S1(N) and S2(N), and further can progress in a substantially right-to-left direction. The section joining gesture SJG can cause sections immediately above and below the section joining gesture SJG to be combined into a single section. For example, section joining gesture SJG passes between existing sections S1(N) and S2(N), which are disposed substantially immediately above and below a portion of the SJG, respectively. As a result of the section joining gesture SJG, sections S1(N) and S2(N) are combined into a new section S1'(N), as best shown in FIG. 15F. Further, TEXT(N) from original section S1(N) and TEXT2(N) from original section S2(N) are also combined into new section S1'(N), as can be seen in FIG. 15F.

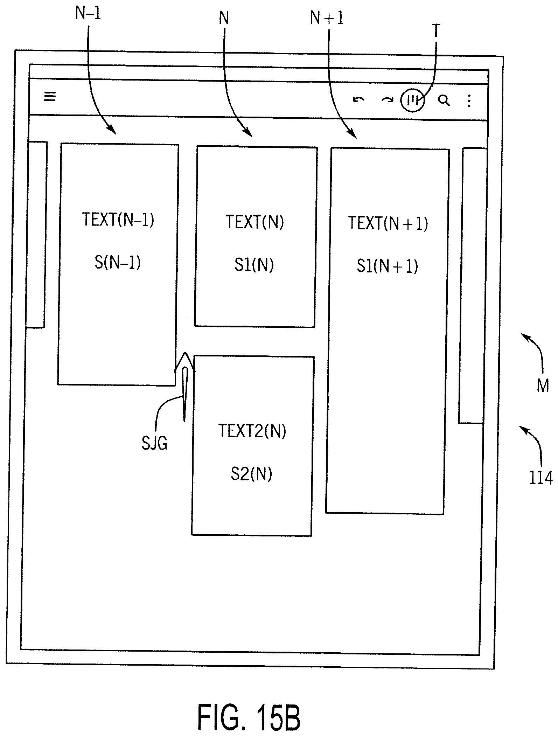

Turning to FIG. 15B, an implementation of the section joining gesture SJG is shown in macro mode M. A portion of section joining gesture SJG passes between, or substantially between, images of existing pages N-1 and N, begins and/or ends between vertical boundaries of a section to be joined to a preceding section, and further can progress in a substantially down-to-up direction. The section joining gesture SJG can cause a section having vertical boundaries respectively above and below the start and/or end of the section joining gesture SJG to be joined to a preceding section and combined into a single section. For example, as shown in FIG. 15B section joining gesture SJG passes between existing pages N-1 and N and begins between vertical boundaries of section S2(N). As a result of the section joining gesture SJG, sections S1(N) and S2(N) are combined into a new section S1'(N), as best shown in FIG. 15F. Further, TEXT(N) from original section S1(N) and TEXT2(N) from original section S2(N) are also combined into new section S1'(N), as can be seen in FIG. 15F.

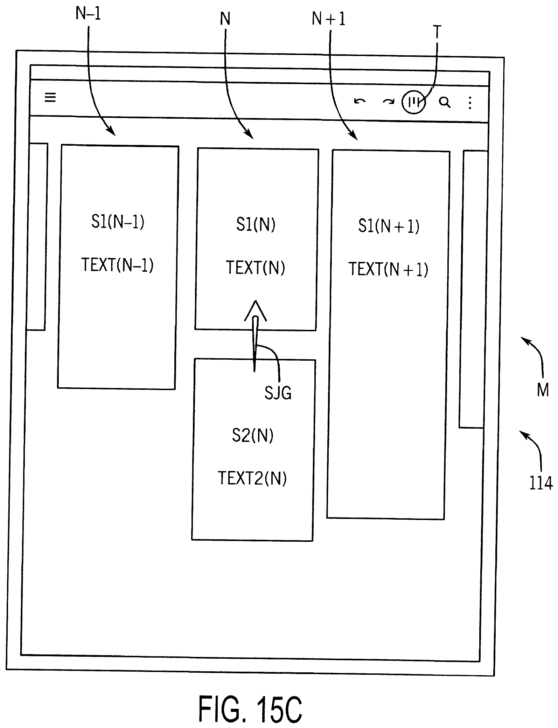

Turning to FIG. 15C, an implementation of the section joining gesture SJG is shown in macro mode M. A portion of section joining gesture SJG passes between, or substantially between, left and right horizontal boundaries of a section to be joined to a preceding section, and the section joining gesture SJG begins and/or ends between vertical boundaries of the section to be joined to a preceding section, and further can progress in a substantially down-to-up direction. The section joining gesture SJG can also end between vertical boundaries of the section (S1(N)) to which another section (S2(N)) is to be joined. The section joining gesture SJG can cause a section having vertical boundaries respectively above and below the start and/or end of the section joining gesture SJG to be joined to a preceding section and combined into a single section. For example, as shown in FIG. 15C section joining gesture SJG passes between left and right horizontal boundaries of section S2(N) and begins between vertical boundaries of section S2(N). As a result of the section joining gesture SJG, sections S1(N) and S2(N) are combined into a new section S1'(N), as best shown in FIG. 15F. Further, TEXT(N) from original section S1(N) and TEXT2(N) from original section S2(N) are also combined into new section S1'(N), as can be seen in FIG. 15F.

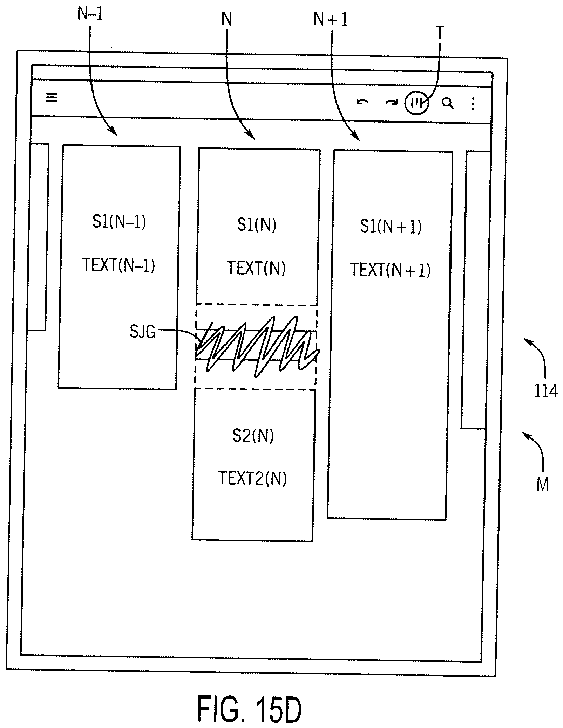

Turning to FIG. 15D, an implementation of the section joining gesture SJG is shown in macro mode M. In some implementations, the section joining gesture SJG is a user motion, or touch, covering portions of adjacent sections to be joined, and the degrees of coverage of each of the sections for the section joining gesture SJG to be recognized accordingly can be threshold values, a function of the size of the sections, a speed at which the section joining gesture SJG is made, a shape of the section joining gesture SJG, a pressure at which the section joining gesture SJG is input into the computer device 100, a preset value or any other consideration. The section joining gesture SJG can be effectively a 'scribble' shape or a 'zig-zag' shape, with elements in substantially different directions and at various angles, or can be any other shape. For example, as shown in FIG. 15D, the section joining gesture SJG covers portions of adjacent sections S1(N) and S2(N) to be joined. As a result of the section joining gesture SJG, sections S1(N) and S2(N) are combined into a new section S1'(N), as best shown in FIG. 15F. Further, TEXT(N) from original section S1(N) and TEXT2(N) from original section S2(N) are also combined into new section S1'(N), as can be seen in FIG. 15F.

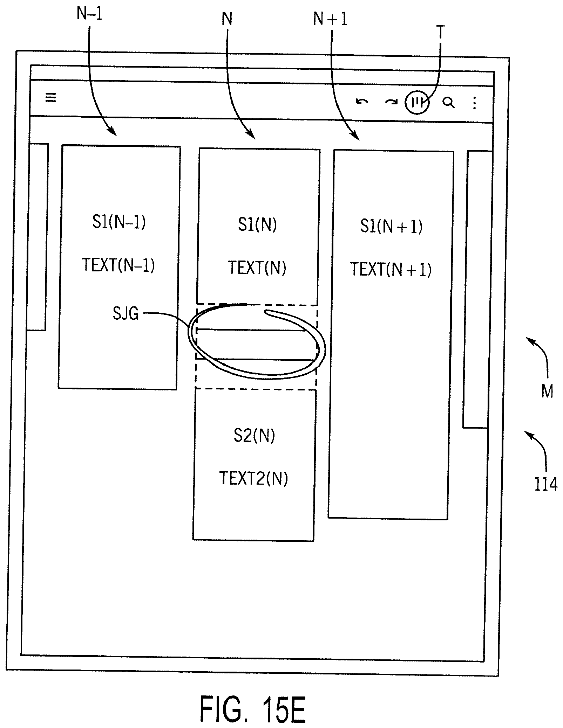

Turning to FIG. 15E, an implementation of the section joining gesture SJG is shown in macro mode M. In some implementations, the section joining gesture SJG is a user motion, or touch, covering portions of adjacent sections to be joined, and the degrees of coverage of each of the sections for the section joining gesture SJG to be recognized accordingly can be threshold values, a function of the size of the sections, a speed at which the section joining gesture SJG is made, a shape of the section joining gesture SJG, a pressure at which the section joining gesture SJG is input into the computer device 100, a preset value or any other consideration. The section joining gesture SJG can be effectively a circular, ovular, or substantially circular or ovular shape, which may or may not be a closed shape defining a fully-bounded interior. Further, a start point and/or end point of the section joining gesture SJG can be within the sections to be joined. For example, as shown in FIG. 15E section joining gesture SJG covers portions of adjacent sections S1(N) and S2(N) to be joined. As a result of the section joining gesture SJG, sections S1(N) and S2(N) are combined into a new section S1'(N), as best shown in FIG. 15F. Further, TEXT(N) from original section S1(N) and TEXT2(N) from original section S2(N) are also combined into new section S1'(N), as can be seen in FIG. 15F.

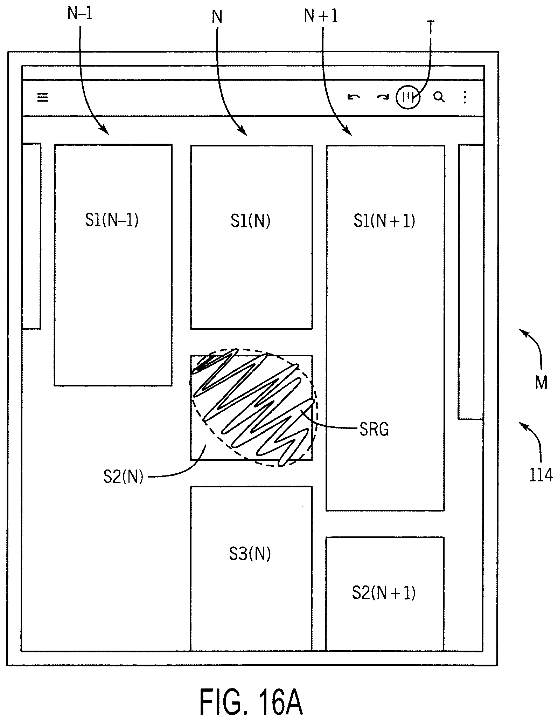

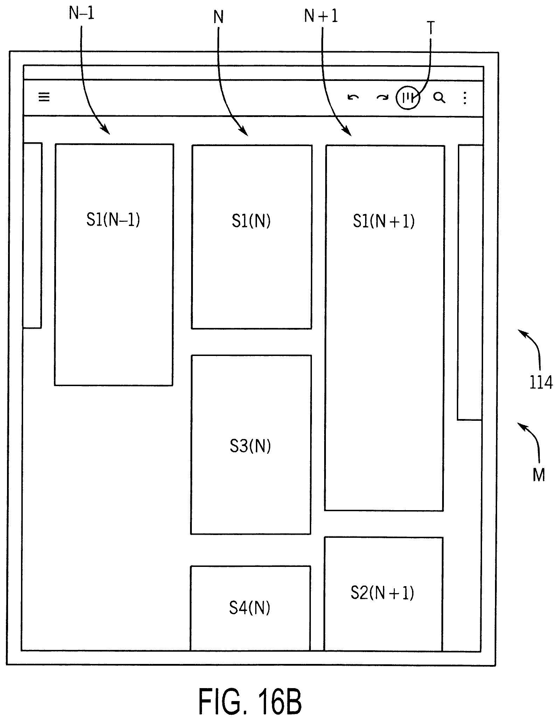

FIGS. 16A and 16B illustrate a process of removing a section according to exemplary implementations of the present disclosure. Turning to FIG. 16A, a section removal gesture SRG is illustrated, and covers, exclusively covers, substantially covers or substantially exclusively covers a section to be removed from a page. In some implementations, the section removal gesture SRG is a user motion, or touch, covering portions of a section to be removed, and the degree of coverage of the section for the section removal gesture SRG to be recognized accordingly can be a threshold value, a function of the size of the section, a speed at which the section removal gesture SRG is made, a shape of the section removal gesture SRG, a pressure at which the section removal gesture SRG is input into the computer device 100, a preset value or any other consideration. For example, as shown in FIG. 16A section removal gesture SRG covers portions of section S2(N) to be removed. As a result of the section removal gesture SRG, section S2(N) is removed from page N, as best shown in FIG. 16B. Section S3(N), previously located below now-removed section S2(N), now becomes located immediately below section S1(N).

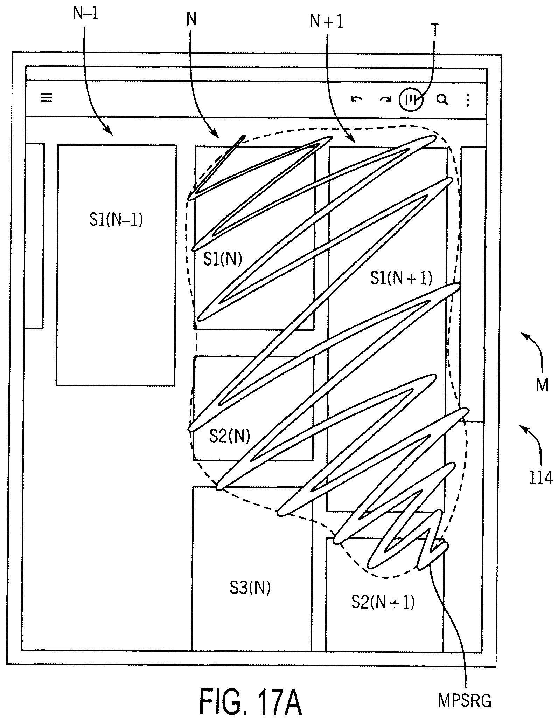

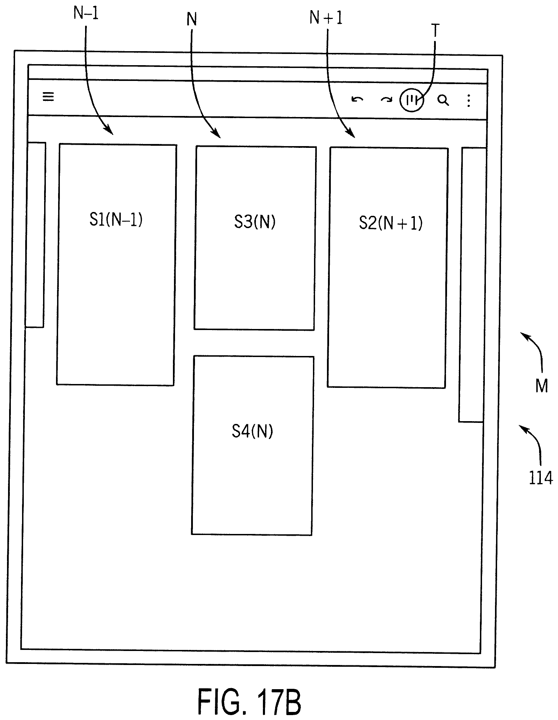

FIGS. 17A and 17B illustrate a process of removing multiple sections in multiple pages according to exemplary implementations of the present disclosure. Turning to FIG. 17A, a multi-page section removal gesture MPSRG is illustrated, and covers, exclusively covers, substantially covers or substantially exclusively covers a plurality of section to be removed from one or more pages. In some implementations, the multi-page section removal gesture MPSRG is a user motion, or touch, covering portions of a section to be removed, and the degree of coverage of the section for the multi-page section removal gesture MPSRG to be recognized accordingly can be a threshold value, a function of the size of the section, a speed at which the multi-page section removal gesture MPSRG is made, a shape of the multi-page section removal gesture MPSRG, a pressure at which the multi-page section removal gesture MPSRG is input into the computer device 100, a preset value or any other consideration. The multi-page section removal gesture MPSRG can be effectively a 'scribble' shape, or a zig-zag shape, with elements in substantially different directions and at various angles, or can be any other shape. For example, as shown in FIG. 17A multi-page section removal gesture MPSRG covers portions of sections S1(N), S2(N) and S1(N+1) to be removed. As a result of the multi-page section removal gesture MPSRG, sections S1(N) and S2(N) are removed from page N and section S1(N+1) is removed from page N+1, as best shown in FIG. 17B. Section S3(N), previously located below now-removed sections S1(N) and S2(N), now becomes the uppermost section of page N. Section S2(N+1), previously located below now-removed section S1(N+1), becomes the upper most section of page N+1.

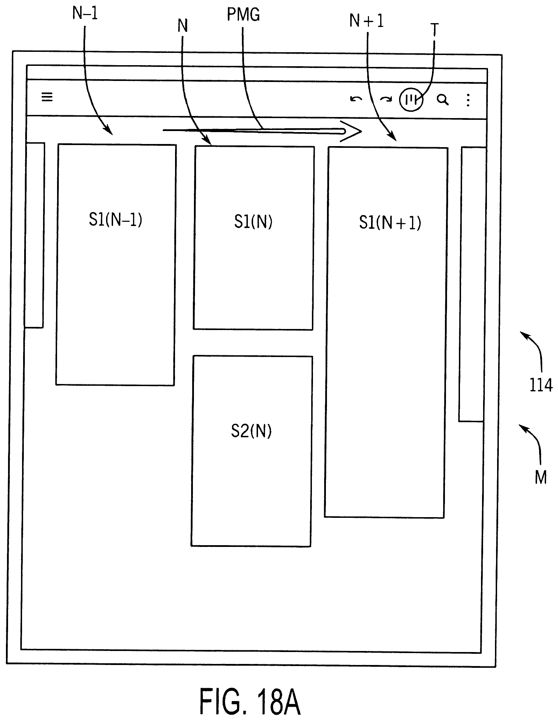

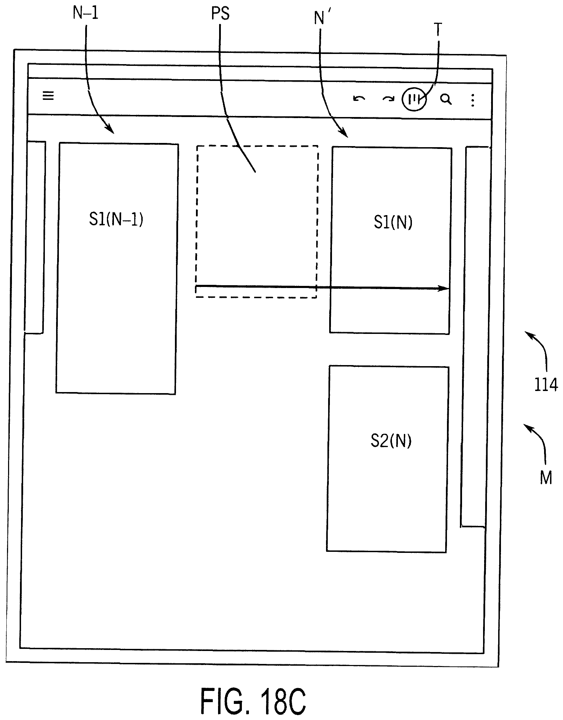

FIGS. 18A to 18C illustrate processes of creating a new page space in the macro viewing mode according to exemplary implementations of the present disclosure. Turning to FIG. 18A, a page move gesture PMG is shown in macro mode M, and can progress in a substantially left-to-right direction. A portion of the page move gesture PMG passes above, or substantially above, existing section S1(N), which is the first and top section in page N. The page move gesture PMG can cause all sections in a given page below, or substantially below, the portion of the page move gesture PMG passing above a top section of a page to move to, and to be added to, a new page following the page on which the sections originally appeared. Additionally, a page space PS is created where the sections originally appeared, and the PMG can progress substantially from left to right. Further, such an action can cause all pages after the new page to move right one page to a higher-numbered page. For example, page move gesture PMG passes above section S1(N), containing TEXT(N) and also above section S2(N), containing TEXT2(N) in FIG. 18A. It can be seen in FIG. 18C that sections S1(N) and S2(N) have moved to new page N', which immediately follows the newly-created page space PS, created where the sections S1(N) and S2(N) originally appeared, as a result of the page move gesture PMG.

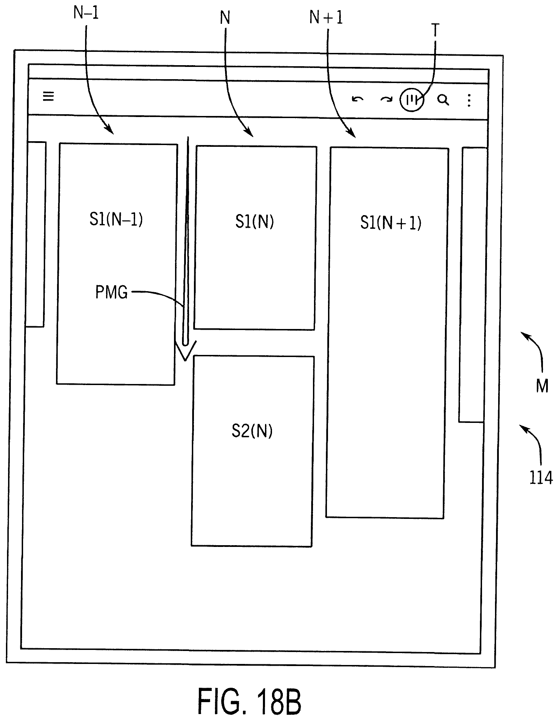

Turning to FIG. 18B, another implementation of the page move gesture PMG is shown in macro mode M, and can progress in a substantially top-to-bottom direction. A portion of the page move gesture PMG passes between, or substantially between, existing pages N-1 and N. The page move gesture PMG can cause all sections in a given page adjacent the portion of the page move gesture PMG passing between adjacent pages to move to, and to be added to, a new page following the page on which the sections originally appeared. In some implementations, the page move gesture PMG causes sections disposed to the right of the page move gesture PMG to move to, and to be added to, a new page following the page on which the sections originally appeared. Additionally, the page space PS is created where the sections originally appeared. Further, such an action can cause all pages after the new page to move right one page to a higher-numbered page. For example, page move gesture PMG passes between pages N-1 and N, and to the left of section S1(N) in FIG. 18B. It can be seen in FIG. 18C that sections S1(N) and S2(N) have moved to new page N', which immediately follows the newly-created page space PS, created where the sections S1(N) and S2(N) originally appeared, as a result of the page move gesture PMG.

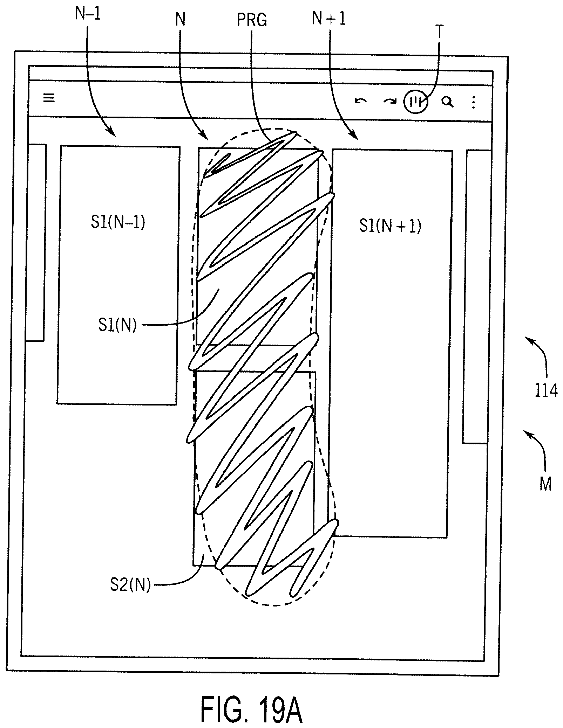

FIGS. 19A to 19B illustrate a process of removing all sections on a single page and creating a new page space in the macro viewing mode, as well as creating a new page, according to exemplary implementations of the present disclosure. Turning to FIG. 19A, a page removal gesture PRG is shown in the macro mode M. In some implementations, the page removal gesture PRG is a user motion, or touch, covering portions of sections in a single page to be deleted, along with the page. The degrees of coverage of each of the sections, or pages, for the page removal gesture PRG to be recognized accordingly can be threshold values, a function of the size of the sections, a speed at which the page removal gesture PRG is made, a shape of the page removal gesture PRG, a pressure at which the page removal gesture PRG is input into the computer device 100, a total area of the page removal gesture PRG, a preset value or any other consideration. The page removal gesture PRG can be effectively a 'scribble' shape or a 'zig-zag' shape, with elements in substantially different directions and at various angles, or can be any other shape. For example, as shown in FIG. 19A, page removal gesture PRG covers portions of adjacent and sequential sections S1(N) and S2(N) to be removed. As a result of the page removal gesture PRG, sections S1(N) and S2(N) are removed and page N is also deleted.

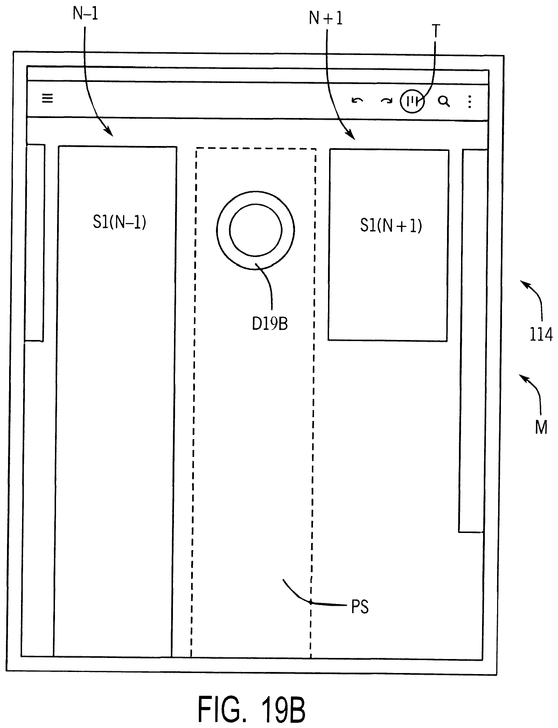

As shown in FIG. 19B, a page space PS is created where page N formerly existed. Also shown in FIG. 19B is double action D(19B). It can be seen that the double action D(19B) is disposed within the page space PS created by the page removal gesture PRG. When the double action D(19B) is performed within the page space PS, a new page can be created and, in some implementations, the new page can be opened in the full-page mode FP.

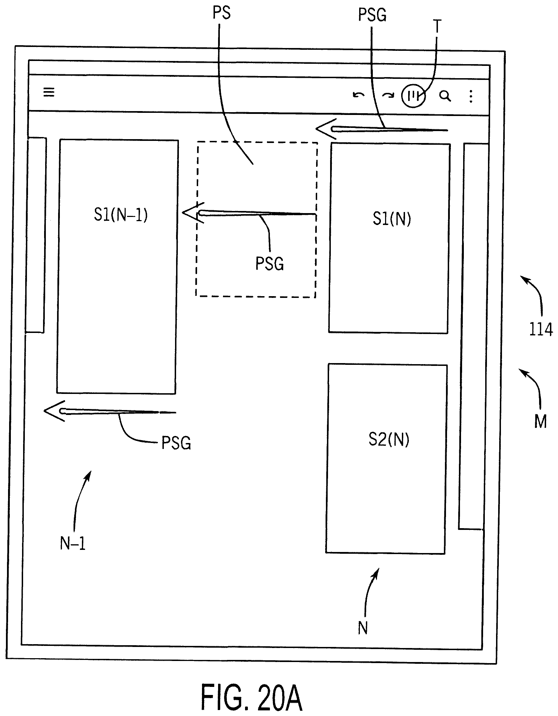

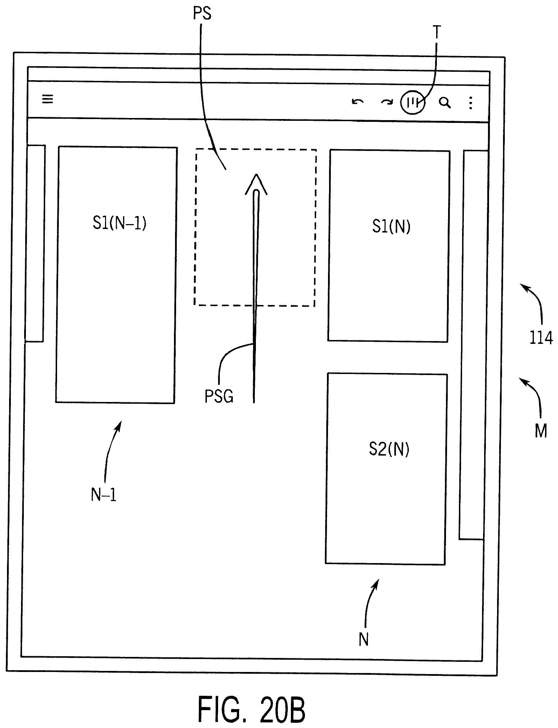

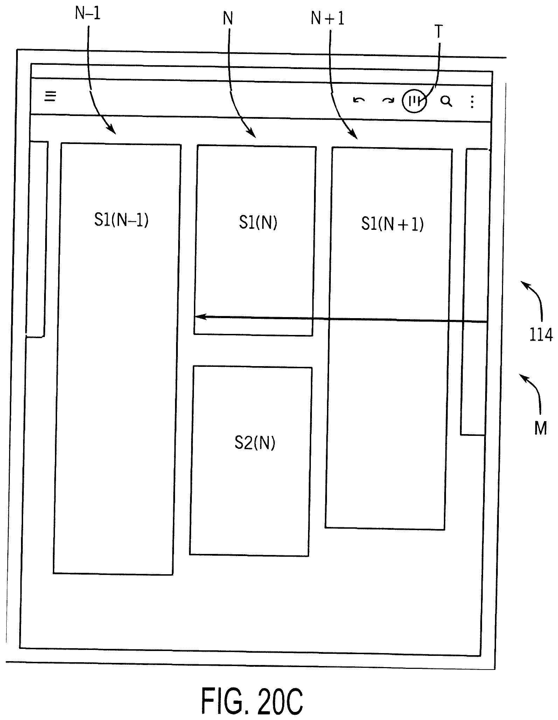

FIGS. 20A to 20C illustrate process of moving pages to fill a vacant page space PS according to exemplary implementations of the present disclosure. Turning to FIG. 20A, multiple page space gestures PSG are illustrated. The page space gesture PSG, can progress in a substantially right-to-left direction and a portion of the page space gesture PSG can be located, or performed, below all sections of a page left of, or preceding, the page space PS, through the page space PS itself, or above all sections of a page right of, or following, the page space PS. In some implementations, as shown in FIG. 20B, the page space gesture PSG can progress in a substantially down-to-up direction and can be disposed within the page space PS, or between or substantially between pages immediately preceding and following the page space PS. After the page space gesture PSG has been performed, the pages following the page space PS, can all move left to a lower-numbered page to fill the now-removed page space PS. In other words, after the page space gesture PSG has been performed, the page following the now-removed page space PS becomes the page immediately following the page preceding the now-removed page space PS. For example, page space PS is removed by a page space gesture PSG, as shown exemplarily in FIGS. 20A and 20B, and page N (following the now-removed page space PS) now immediately follows page N-1 (preceding the now-removed page space PS), as best shown in FIG. 20C.

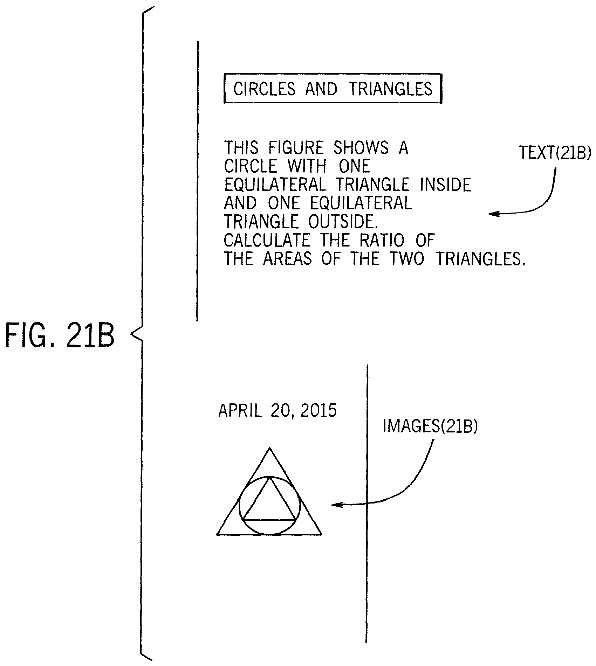

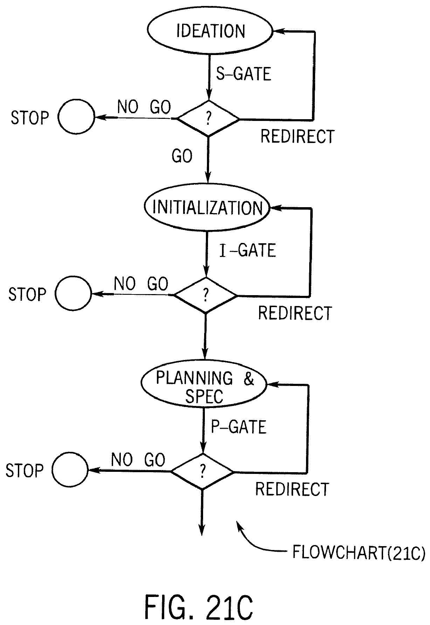

FIGS. 21A to 21C illustrate examples of text and images that can be displayed within pages and sections according to exemplary implementations of the present disclosure. For example, FIG. 21A illustrates text (TEXT21A), FIG. 21B illustrates text (TEXT21B) and images (IMAGES21B) and FIG. 21C illustrates a flowchart (FLOWCHART21C). Each of these exemplary images and texts can occupy one or more sections and/or pages.

It is to be understood that, although the exemplary term "TEXT" is used in figures associated with this disclosure, the systems and methods of this disclosure can be used in conjunction with an infinite range of input types. For example, user inputs, document content and/or digital ink can include text, recognized text, drawings, figures, tables, charts and/or any other type of user-created or imported content.

The present system and method provide an application which allows users, such as students, academic and working professionals, to take handwritten notes, such as during lectures, meetings and brainstorming sessions, on their computing devices in a meaningful and shareable format akin to word processed documents, and to edit the notes, in the form of text, images and/or flowcharts, in a macro view mode M. The present system and method further allow natural writing to be input since the writing is made on (ruled) lines, and paragraphs and other layout elements are respected responsive to orientation (i.e., portrait or landscape) and device display capacity. Further interaction with the handwritten or typeset text, or non-text content, created in a note, such as editing the content, manipulating the layout of the notes, or converting or adding the notes into a document, can be performed directly within the application itself without the need to import the note into a separate document processing application.

While the foregoing has described what is considered to be the best mode and/or other examples, it is understood that various modifications may be made therein and that the subject matter disclosed herein may be implemented in various forms and examples, and that they may be applied in numerous other applications, combinations, and environments, only some of which have been described herein. Those of ordinary skill in that art will recognize that the disclosed aspects may be altered or amended without departing from the true spirit and scope of the subject matter. Therefore, the subject matter is not limited to the specific details, exhibits, and illustrated examples in this description. It is intended to protect any and all modifications and variations that fall within the true scope of the advantageous concepts disclosed herein.

## Claims

1. A system for editing digital documents on computing devices, each computing device comprising a processor and at least one non-transitory computer readable medium for recognizing input under control of the processor, the at least one non-transitory computer readable medium configured to:
cause display of, on a display interface of a computing device, digital ink in accordance with document content in a full-page mode;
register, on an input area of the computing device, a slice gesture responsive to a user touch or gesture, the slice gesture comprising: a start point, a generally horizontal gesture relative to the digital ink, and an end point;
create a draft section in response to the slice gesture;
display the draft section generally below a slice gesture input area;
stop displaying all or a portion of the digital ink generally below the slice gesture input area.

2. The system of Claim 1, wherein a page, includes one or more sections, each section being sequentially arranged in a vertically-scrollable column.

3. The system of Claim 1 or 2, wherein the draft section is a new page.

4. The system of Claim 1 or 2, wherein the draft section is a new section.

5. The system of any one of the preceding Claims, additionally comprising validate the slice gesture.

6. The system of Claim 5, wherein validating the slice gesture is based upon at least one of a width of the slice gesture, a height of the slice gesture, a direction of the slice gesture, and a speed of the slice gesture.

7. The system of any one of the preceding Claims, additionally comprising display a digital ink stroke in response to the slice gesture, the digital ink stroke generally tracing the path of the slice gesture, optionally wherein the digital ink stroke fades over a period of time.

8. A method for editing digital documents on computing devices, each computing device comprising a processor and at least one non-transitory computer readable medium for recognizing input under control of the processor, the method comprising:
causing display of, on a display interface of a computing device, digital ink in accordance with document content in a full-page mode;
registering, on an input area of the computing device, a slice gesture responsive to a user touch or gesture, the slice gesture comprising: a start point, a generally horizontal gesture relative to the digital ink, and an end point;
creating a draft section in response to the slice gesture;
displaying the draft section generally below a slice gesture input area;
stop displaying all or a portion of the digital ink generally below the slice gesture input area.

9. The method of Claim 8, wherein a page, includes one or more sections, each section being sequentially arranged in a vertically-scrollable column.

10. The method of Claim 8 or 9, wherein the draft section is a new page.

11. The method of Claim 8 or 9, wherein the draft section is a new section.

12. The method of any one of Claims 8 to 11, additionally comprising validating the slice gesture.

13. The method of Claim 12, wherein validating the slice gesture is based upon at least one of a width of the slice gesture, a height of the slice gesture, a direction of the slice gesture, and a speed of the slice gesture.

14. The method of any one of Claims 8 to 13, additionally comprising displaying a digital ink stroke in response to the slice gesture, the digital ink stroke generally tracing the path of the slice gesture, optionally wherein the digital ink stroke fades over a period of time.

15. A non-transitory computer readable medium having a computer readable program code embodied therein, said computer readable program code adapted to be executed to implement a method for recognizing input on a computing device, the computing device comprising a processor and at least one system non-transitory computer readable medium for recognizing the input under control of the processor, the method comprising operations according to a method of any one of Claims 8 to 14.
